# EUROPÄISCHE PATENTANMELDUNG

(11) **EP 4 796 266 A1**
(43) Veröffentlichungstag der Anmeldung: **26.08.2026**
(21) Anmeldenummer: 25158979.2
(22) Anmeldetag: 20.02.2025
(51) Int. Cl.: B25J 9/16, G05B 19/042, G05B 19/406

(54) **SICHERHEITSVORRICHTUNG UND VERFAHREN ZUR ÜBERWACHUNG MINDESTENS EINER MASCHINE**

(71) Anmelder: SICK AG, 79183 Waldkirch (DE)
(72) Erfinder: Liegibel, Pascal, 79183 Waldkirch (DE); Neumann, Thomas, 79183 Waldkirch (DE); Steinkemper, Heiko, 79183 Waldkirch (DE)
(74) Vertreter: Manitz Finsterwald Patent- und Rechtsanwaltspartnerschaft mbB

(57) **Zusammenfassung**

Es wird eine Sicherheitsvorrichtung zur Überwachung einer Maschine bereitgestellt mit einen Sensor zum Erzeugen von Sensordaten zu der Maschine sowie eine mit dem Sensor und der Maschine verbundene Verarbeitungseinheit für die Sensordaten, die als Ausführungsumgebung mit einem Rechenknoten sowie dafür ausgebildet ist, eine Vielzahl von Logikeinheiten auf dem einen Rechenknoten ablaufen zu lassen, wobei eine Logikeinheit als Sicherheitsfunktionseinheit zur sicherheitsgerichteten Auswertung der Sensordaten und eine Logikeinheit als Diagnoseeinheit zur Überwachung der einen Sicherheitsfunktionseinheit ausgebildet ist, wobei die Sicherheitsfunktionseinheit dafür ausgebildet ist, Zustandsnachrichten und Ausführungsnachrichten an die Diagnoseeinheit zu übermitteln; wobei die Diagnoseeinheit dafür ausgebildet ist, in einer Zustandsüberwachung anhand von Zuständen aus den Zustandsnachrichten und in einer Ausführungsüberwachung anhand eines Ausführungsablaufs aus den Ausführungsnachrichten eine sicherheitsrelevante Fehlfunktion der Sicherheitsvorrichtung zu erkennen, wobei die Logikeinheit, die als Diagnoseeinheit ausgebildet ist, zugleich als Sicherheitsfunktionseinheit ausgebildet ist, und die Sicherheitsfunktionseinheit und die Diagnoseeinheit innerhalb der Logikeinheit, die als Diagnoseeinheit ausgebildet ist, miteinander kommunizieren.

## Beschreibung

Die Erfindung betrifft eine Sicherheitsvorrichtung und ein Verfahren zur Überwachung mindestens einer Maschine nach dem Oberbegriff von Anspruch 1 beziehungsweise Anspruch 15.

Die Sicherheitstechnik befasst sich mit dem Personenschutz beziehungsweise der Vermeidung von Unfällen mit Maschinen. Eine gattungsgemäße Sicherheitsvorrichtung nutzt einen oder mehrere Sensoren, um eine Maschine beziehungsweise deren Umgebung zu überwachen und sie bei drohender Gefahr rechtzeitig in einen sicheren Zustand zu versetzen. Eine typische herkömmliche sicherheitstechnische Lösung überwacht mit dem mindestens einen Sensor, etwa mittels eines Laserscanners, ein Schutzfeld, das während des Betriebs der Maschine vom Bedienpersonal nicht betreten werden darf. Erkennt der Sensor einen unzulässigen Schutzfeldeingriff, etwa ein Bein einer Bedienperson, so löst er einen Nothalt der Maschine aus. Es gibt alternative Schutzkonzepte, wie das sogenannte Speedand-Separation-Monitoring, bei dem die Abstände und Geschwindigkeiten der erfassten Objekte in der Umgebung bewertet und im Gefahrenfalle reagiert wird.

In der Sicherheitstechnik ist eine besondere Verlässlichkeit gefordert, und deshalb sind hohe Sicherheitsanforderungen zu erfüllen, beispielsweise die Norm EN13849 für Maschinensicherheit und die Gerätenorm EN61496 für berührungslos wirkende Schutzeinrichtungen (BWS). Einige typische Maßnahmen dafür sind eine sichere elektronische Auswertung durch redundante, diversitäre Elektronik oder verschiedene Funktionsüberwachungen, etwa die Überwachung der Verschmutzung optischer Bauteile einschließlich einer Frontscheibe. Etwas allgemeiner sind wohldefinierte Fehlerbeherrschungsmaßnahmen nachzuweisen, damit mögliche sicherheitskritische Fehler entlang der Signalkette von dem Sensor über die Auswertung bis zur Einleitung der sicherheitstechnischen Reaktion vermieden oder kontrolliert werden.

Aufgrund der hohen Anforderungen an Hardware und Software in der Sicherheitstechnik werden bislang in erster Linie monolithische Architekturen eingesetzt, mit spezifisch entwickelter Hardware, die Redundanzen und Funktionsüberwachung durch Mehrkanaligkeit und Testmöglichkeiten vorsieht. Entsprechend werden Nachweise korrekter Algorithmen etwa nach IEC TS 62998, IEC-61508-3 geführt, und der Entwicklungsprozess der Software unterliegt permanenten strengen Tests und Überprüfungen. Ein Beispiel hierfür ist ein Sicherheitslaserscanner wie beispielsweise erstmals aus DE 43 40 756 A1 bekannt und in seinen Grundzügen bis heute weit verbreitet eingesetzt. Dort ist die gesamte Auswertungsfunktionalität integriert, einschließlich der Lichtlaufzeitmessung zur Abstandsbestimmung und der Objekterfassung in konfigurierten Schutzfeldern. Das Ergebnis ist ein fertig ausgewertetes binäres Absicherungssignal an einem zweikanaligen Ausgang (OSSD, Output Signal Switching Device) des Laserscanners, das im Falle eines Schutzfeldeingriffs die Maschine stoppt. Auch wenn sich dieses Konzept bewährt hat, bleibt es unflexibel, da Änderungen praktisch nur durch Neuentwicklung eines Nachfolgemodells des Laserscanners möglich sind.

In einigen herkömmlichen Sicherheitsanwendungen wird zumindest ein Teil der Auswertung aus dem Sensor in eine programmierbare Steuerung ausgelagert (SPS, Speicherprogrammierbare Steuerung). Dafür sind aber besondere Sicherheitssteuerungen erforderlich, die selbst zur Fehlervermeidung und -aufdeckung mehrkanalige Strukturen und dergleichen aufweisen. Sie sind daher kostenaufwändig und bieten vergleichsweise wenig Speicher- und Rechenkapazitäten, die beispielsweise mit einer 3D-Bildverarbeitung völlig überfordert sind.

Die Verwendung von Standardsteuerungen wäre zwar unter Einbettung in die notwendigen Funktionsüberwachungen grundsätzlich denkbar, jedoch wird dies heutzutage im industriellen Umfeld kaum angewandt, da es aufwändigere Architekturen und Expertenwissen verlangt. Im Übrigen sind auch Standardsteuerungen oder SPS nur mit bestimmten Sprachen bei zum Teil sehr limitierendem Sprachraum programmierbar. Schon verhältnismäßig einfache Funktionsblöcke bedürfen erheblicher Entwicklungsaufwände und Laufzeitressourcen, so dass deren Implementierung in einer Standardsteuerung, erst recht unter Sicherheitsmaßnahmen wie Redundanzen, bei etwas komplexeren Anwendungen kaum realisierbar sind.

Die EP 3 709 106 A1 kombiniert in einem Sicherheitssystem eine Sicherheitssteuerung mit einer Standardsteuerung. Aufwändigere Berechnungen bleiben der Standardsteuerung überlassen, und deren Ergebnisse werden durch die Sicherheitssteuerung validiert. Die Sicherheitssteuerung greift aber dafür auf vorhandene sichere Daten eines sicheren Sensors zurück, was die möglichen Anwendungsszenarien einschränkt und zudem wiederum Expertenwissen fordert, um geeignete sichere Daten zu gewinnen und damit geeignet zu validieren. Zudem ist die Hardwarestruktur weiterhin fest vorgegeben und die Anwendung speziell darauf fest implementiert.

In vielen Fällen wäre es erwünscht, die Sicherheitsüberwachung mit einer Automatisierungsaufgabe zu kombinieren. So werden nicht nur Unfälle vermieden, sondern die eigentliche Aufgabe der Maschine wird ebenfalls automatisiert unterstützt. Bisher sind dafür aber meist völlig unterschiedliche Systeme und Sensoren im Einsatz. Das liegt unter anderem daran, dass ein Sicherheitssensor für eine Automatisierungsaufgabe viel zu teuer ist und umgekehrt die Komplexität eines Sicherheitssensors nicht durch weitere Funktionen überladen werden soll. Die EP 2 053 538 B1 erlaubt für eine 3D-Kamera die Definition von separaten Sicherheits- und Automatisierungsbereichen. Das ist aber nur ein erster Schritt, da zwar immerhin derselbe Sensor für die beiden Welten Sicherheit und Automatisierung verwendet wird, diese beiden Aufgaben dann aber doch räumlich und implementierungsseitig wieder eindeutig voneinander trennt. Die IEC 62998 ermöglicht die Koexistenz von Sicherheits- und Automatisierungsdaten, macht aber als Norm keinerlei konkrete Implementierungsvorschläge.

Außerhalb der Sicherheitstechnik gibt es längst sehr viel flexiblere Architekturen. Der monolithische Ansatz ist dort seit langem in mehreren Schritten moderneren Konzepten gewichen. Die frühere traditionelle Verteilung (Deployment) mit fester Hardware, auf der ein Betriebssystem die einzelnen Anwendungen koordiniert, hat zwar weiterhin ihre Berechtigung in Standalone-Geräten, genügt aber in einer vernetzten Welt längst nicht mehr. Der Grundgedanke in der Weiterentwicklung war das Einziehen von zusätzlichen Schichten, die von der konkreten Hardware immer weiter abstrahieren.

Ein erster Schritt sind die sogenannten virtuellen Maschinen, wo die zusätzliche Schicht als Hypervisor oder Virtual Machine Monitor bezeichnet ist. Solche Ansätze werden inzwischen auch zaghaft in der Sicherheitstechnik verfolgt. So bietet etwa die EP 3 179 35 278 B1 in einem Sicherheitssensor eine geschützte Umgebung an, um dem Anwender zu erlauben, eigene Programmbausteine auf dem Sicherheitssensor ablaufen zu lassen.

Solche Programmbausteine sind dann aber sorgfältig von der Sicherheitsfunktionalität getrennt und tragen dazu nichts bei.

Eine weitergehende Abstraktion basiert auf sogenannten Containern (Containervirtualisierung, Containering). Ein Container ist quasi eine kleine virtuelle Kapsel für eine Softwareanwendung, die eine vollständige Umgebung für deren Ablauf einschließlich Speicherbereichen, Bibliotheken und dergleichen bietet. Die zugehörige abstrahierende Schicht oder Laufzeitumgebung wird container runtime genannt. Damit kann die Softwareanwendung unabhängig von der praktisch beliebigen Hardware entwickelt werden, auf der sie später abläuft. Container werden häufig mit Hilfe von Docker umgesetzt.

In einer modernen loT-Architektur (Internet of Things, Industrial Internet of Things) wird eine Vielzahl von Containern mit unterschiedlichsten Softwareanwendungen zusammengeführt. Diese Container müssen geeignet koordiniert werden, was in diesem Zusammenhang als Orchestrieren bezeichnet wird und wofür ein sogenannter orchestration layer als weitere Abstraktion hinzukommt. Für die Container-Orchestrierung setzt sich zunehmend Kubernetes durch, daneben sind Alternativen wie Docker Swarm als Erweiterung von Docker sowie rkt oder LXC bekannt.

Der Einsatz solcher modernen, abstrahierenden Architekturen in der Sicherheitstechnik scheitert bislang an den hohen Hürden der Sicherheitsnormen und der entsprechend konservativen Herangehensweise im Anwendungsfeld der funktionalen Sicherheit. Allgemein im industriellen Umfeld werden Containertechnologien durchaus verfolgt, und beispielsweise in der Automobilindustrie gibt es Pläne für den Einsatz von Kubernetes-Architekturen, und auch die Luftwaffe verfolgt derlei Ansätze. Dies alles zielt aber nicht auf die funktionale Sicherheit und löst somit die genannten Probleme nicht.

Zwar ist eine hohe Verfügbarkeit auch in einer üblichen loT-Welt erwünscht, aber diese Form der Ausfallsicherheit ist längst noch nicht mit dem vergleichbar, was die Sicherheitsnormen fordern. Für den Sicherheitstechniker sind daher Edge- oder Cloudanwendungen für eine normgerechte Sicherheit bisher undenkbar. Es widerspricht dem verbreiteten Denken, für reproduzierbare Bedingungen zu sorgen und sich gegen alle unter diesen Bedingungen vorstellbaren Möglichkeiten einer Fehlfunktion zu wappnen. Eine weitgehende Abstraktion oder Virtualisierung schafft eine zusätzliche Ungewissheit, die bislang mit den Sicherheitsanforderungen unvereinbar erscheint.

Die EP 4 040 034 A1 stellt eine Sicherheitsvorrichtung und ein Sicherheitsverfahren zur Überwachung einer Maschine vor, bei dem mit den genannten Container- und Orchestrierungstechnologien die Sicherheitsfunktionalität von der unterliegenden Hardware abstrahiert werden kann. Es werden Logikeinheiten nach Bedarf erzeugt, aufgelöst oder anderer Hardware zugewiesen. Das ermöglicht variable Grade der Redundanz und eine flexible gegenseitige Überwachung von Logikeinheiten. Nichtsdestotrotz besteht aber das Bedürfnis sicherheitsrelevante Fehler noch einfacher, insbesondere mittels einer flexiblen Architektur, aufzudecken.

Es ist daher Aufgabe der Erfindung, das soeben geschilderte flexible Sicherheitskonzept für die praktische Umsetzung weiter zu verbessern.

Diese Aufgabe wird durch eine Sicherheitsvorrichtung und ein Verfahren zur Überwachung mindestens einer Maschine nach Anspruch 1 beziehungsweise 15 gelöst. Die überwachte oder abzusichernde Maschine ist zunächst allgemein zu verstehen, es handelt sich beispielsweise um eine Bearbeitungsmaschine, eine Fertigungsstraße, eine Sortieranlage, eine Prozessanlage, einen Roboter oder ein Fahrzeug in zahlreichen Spielarten, wie schienengebunden oder nicht, geführt oder fahrerlos und dergleichen. Mindestens ein Sensor liefert Sensordaten zu der Maschine, d.h. Daten über die Maschine selbst, über das, mit dem sie interagiert, oder über deren Umgebung. Die Sensordaten sind zumindest teilweise sicherheitsrelevant, zusätzliche nicht sicherheitsrelevante Sensordaten für Automatisierungs- oder Komfortfunktionen sind denkbar. Die Sensoren können, müssen aber keine sicheren Sensoren sein, die Sicherheit kann erst nachgelagert gewährleistet werden.

Die Vorrichtung kann beispielsweise für Kubernetes eingesetzt werden bzw. kann Kubernetes ausführen, um eine sichere Ausführung zu erreichen. Verschiedene Ausführungsformen stellen eine verbesserte Zustands- und Ausführungsüberwachung bereit.

Eine Verarbeitungseinheit fungiert als Ausführungsumgebung. Die Verarbeitungseinheit ist somit das strukturelle Element, die Ausführungsumgebung dessen Funktion. Die Verarbeitungseinheit ist mindestens mittelbar mit dem Sensor und der Maschine verbunden. Sie hat demnach Zugriff auf die Sensordaten für deren Verarbeitung, möglicherweise indirekt über zwischengeschaltete weitere Einheiten, und kann mit der Maschine kommunizieren und insbesondere auf sie einwirken, vorzugsweise über eine Maschinensteuerung der Maschine. Die Verarbeitungseinheit oder Ausführungsumgebung bezeichnet als Sammelbegriff die Hardware und Software, mit der anhand der Sensordaten über das Erfordernis und vorzugsweise auch Art einer sicherheitsgerichteten Reaktion der Maschine entschieden wird.

Die Verarbeitungseinheit umfasst mindestens einen Rechenknoten. Das ist eine digitale Rechenvorrichtung beziehungsweise ein Hardwareknoten oder ein Teil davon, der Rechen- und Speicherkapazitäten zum Ausführen eines Softwarefunktionsblocks zur Verfügung stellt. Allerdings muss nicht jeder Rechenknoten zwangsläufig ein separater Hardwarebaustein sein, es können beispielsweise durch Verwendung von Multiprozessoren mehrere Rechenknoten auf demselben Gerät realisiert sein, und umgekehrt kann ein Rechenknoten unterschiedliche Hardwareressourcen bündeln.

Auf dem Rechenknoten oder einem der Rechenknoten laufen im Betrieb der Sicherheitsvorrichtung mehrere Logikeinheiten ab. Eine Logikeinheit bezeichnet demnach allgemein einen Softwarefunktionsblock. Erfindungsgemäß ist mindestens eine Logikeinheit als Sicherheitsfunktionseinheit ausgebildet, die eine sicherheitsgerichtete Auswertung der Sensordaten leistet. Ziel der sicherheitsgerichteten Auswertung ist der Personenschutz beziehungsweise eine Unfallvermeidung, indem anhand der Sensordaten festgestellt wird, ob eine Gefahr droht beziehungsweise ein sicherheitsrelevantes Ereignis erkannt wurde. Das ist beispielsweise bei Erfassung einer Person zu nahe an der Maschine oder in einem Schutzfeld der Fall. An der sicherheitsgerichteten Auswertung können eine oder mehrere Logikeinheiten beteiligt sein. Im Falle eines sicherheitsrelevanten Ereignisses wird vorzugsweise ein Sicherheitssignal an die Maschine ausgegeben, um dort eine sicherheitsgerichtete Reaktion auszulösen, mit der die Maschine in einen sicheren Zustand versetzt wird, der die Gefahr beseitigt oder wenigstens auf ein hinnehmbares Niveau absenkt. Weiterhin ist mindestens eine Logikeinheit als Diagnoseeinheit ausgebildet. Damit wird die Funktion anderer Logikeinheiten und insbesondere der mindestens einen Sicherheitsfunktionseinheit auf Fehler hin überwacht.

Die Erfindung geht von dem Grundgedanken aus, mittels der Diagnoseeinheit eine Zustands- und Ausführungsüberwachung der Logikeinheiten durchzuführen. Dafür übermittelt die mindestens eine Sicherheitsfunktionseinheit Zustandsnachrichten und Ausführungsnachrichten an die Diagnoseeinheit, die dort ausgewertet werden.

Die Sicherheitsfunktionseinheit und die Diagnoseeinheit können in einem gemeinsamen Container ausgeführt werden, so dass innerhalb des Containers Zustandsnachrichten und Ausführungsnachrichten von der Sicherheitsfunktionseinheit an die Diagnoseeinheit übermittelt werden können.

Der Zustand oder Status der mindestens einen Sicherheitsfunktionseinheit gibt Auskunft über deren Einsatzbereitschaft und mögliche Einschränkungen oder Fehler in der mindestens einen Sicherheitsfunktionseinheit. Ausführungsnachrichten betreffen die Ausführung der Sicherheitsfunktion oder des Dienstes, den die mindestens eine Sicherheitsfunktionseinheit ausführt, und daraus lässt sich ein Ausführungsablauf der ausgeführten Sicherheits-funktionen beziehungsweise Dienste erzeugen. Gemeinsam ermöglicht dies eine Systemdiagnose, mit der eine sicherheitsrelevante Fehlfunktion der Sicherheitsvorrichtung erkannt werden kann. Dabei benötigt die Diagnoseeinheit weder spezielles Wissen, wie oder mit welchem Algorithmus eine Sicherheitsfunktionseinheit arbeitet, noch welche Auswertungsergebnisse sie liefert, obwohl beides ergänzend möglich wäre. Im Fehlerfall kann die sichere Funktion der Sicherheitsvorrichtung nicht garantiert werden, vorzugsweise mit ähnlichen Konsequenzen einer sicherheitsgerichteten Reaktion der Maschine wie im Falle einer durch ein Sicherheitsfunktionsmodul erkannten Gefahr. Für die Systemdiagnose genügt ein einziges als Diagnoseeinheit ausgebildetes Logikmodul, aber es wäre auch denkbar, die Zustands- und Ausführungsüberwachung in je einer eigenen Diagnoseeinheit zu implementieren oder die Funktionalität anders auf mehrere Logikmodule zu verteilen.

Die Erfindung hat den Vorteil, dass eine hochflexible Sicherheitsarchitektur ermöglicht wird, in der unter anderem in einem industriellen Umfeld (Industrial Internet of Things, IIoT) sicherheitsrelevante Anwendungen koordiniert oder orchestriert werden können. Dabei können Sicherheit und Automatisierung eng verzahnt werden. Es genügt Standardhardware, es ist keine aufwändige dedizierte sichere Hardware erforderlich. Die Erfindung ist weitgehend unabhängig von der konkreten Hardwarelandschaft, solange insgesamt genügend Speicher- und Rechenressourcen zur Verfügung stehen. Außerdem ist die Robustheit erheblich erhöht, weil Logikeinheiten auf diversitärer Hardware implementiert und zwischen Rechenknoten verschoben werden können. Als ein wichtiger denkbarer Anwendungsfall kann die Hardwarelandschaft oder Teil der Hardwarelandschaft eine Cloud sein, die Erfindung verbindet also die zuvor einander fremden Welten der Cloud und der Sicherheitstechnik. Im Rahmen von Cloud-Native-Konzepten gibt es bestehende Open-Source-Frameworks und -Werkzeuge, die auch groß angelegte Anwendungen unterstützen, jedoch bislang keine funktionale Sicherheit bieten.

Der erfindungsgemäße Ansatz ist radikal anders als herkömmlich in der Sicherheitstechnik. Bisher wird eine feste Hardwarestruktur vorgegeben, meist eigens für genau diese Sicherheitsfunktion entwickelt, und die Softwarefunktionalität ist für genau diese Hardwarestruktur entwickelt, dort fest implementiert und getestet. Eine nachträgliche Veränderung der Softwareverteilung (deployment) ist ausgeschlossen, und das gilt erst recht durch eine Veränderung der zugrundeliegenden Hardware. Derartige Modifikationen erfordern herkömmlich zumindest einen aufwändigen Umbau durch einen Sicherheitsexperten, in der Regel eine komplette Neuentwicklung. Ein Ausfluss der typischen konservativen Herangehensweise in der Industrie und erst recht in der Sicherheitstechnik ist, dass selbst Firmware- oder Softwareupdates von Sensoren und Steuerungen äußerstenfalls in langen Zyklen und typischerweise gar nicht vorgenommen werden.

In dieser Beschreibung werden immer wieder die Begriffe Sicherheit oder sicher verwendet. Das ist vorzugsweise jeweils im Sinne einer Sicherheitsnorm zu verstehen. Es wird demnach eine Sicherheitsnorm beispielsweise für Maschinensicherheit, berührungslos wirkende Schutzeinrichtungen oder Unfallvermeidung im Personenschutz erfüllt, oder es werden nochmals etwas anders formuliert durch Normen definierte Sicherheitsniveaus eingehalten, folglich jeweils Fehler bis zu einem in der Sicherheitsnorm oder analog dazu spezifizierten Sicherheitsniveau beherrscht. Einleitend sind einige Beispiele solcher Sicherheitsnormen genannt, wo die Sicherheitsniveaus beispielsweise als Schutzklassen oder Performance Level bezeichnet sind. Die Erfindung ist nicht auf eine bestimmte dieser Sicherheitsnormen festgelegt, die sich in ihrer konkreten Nummerierung und Formulierung regional und im Laufe der Zeit ändern können, nicht aber in ihren grundlegenden Prinzipien zur Schaffung von Sicherheit. Später wird in einigen Ausführungsformen der Sicherheitsbegriff etwas erweitert auf eine kontextbezogene oder situative Sicherheit.

Die Implementierung der Ausführungsumgebung erfolgt vorzugsweise in Kubernetes, einem Open-Source System. Dort wird die Ausführungsumgebung als "Control plane" bezeichnet. Ein Master koordiniert die allgemeinen Abläufe beziehungsweise die Orchestrierung (orchestration layer). Rechenknoten heißen in Kubernetes Nodes, und sie weisen mindestens einen Unterknoten oder Pod auf, in dem die Logikeinheiten in jeweiligen Containern ablaufen. Kubernetes kennt bereits Mechanismen, mit denen geprüft wird, ob eine Logikeinheit noch arbeitet. Diese Überprüfung genügt jedoch keinerlei sicherheitsspezifischen Anforderungen und beschränkt sich im Wesentlichen darauf, hin und wieder ein Lebenszeichen zu erhalten und womöglich einen Container neu zu starten. Dabei gibt es keinerlei Garantien, wann der Fehler auffällt und wieder behoben ist.

Die Ausführungsumgebung ist vorzugsweise dafür ausgebildet, Logikeinheiten zu erzeugen, aufzulösen und einem Rechenknoten zuzuweisen beziehungsweise sie zwischen Rechenknoten zu verschieben. Das geschieht vorzugsweise nicht nur einmalig, sondern auch dynamisch während des Betriebs, und es betrifft ganz ausdrücklich auch die sicherheitsrelevanten Logikeinheiten, also die mindestens eine Sicherheitsfunktionseinheit und/oder die Diagnoseeinheit. Die Verknüpfung zwischen Hardware und Auswertung wird damit unter Wahrung der funktionalen Sicherheit fließend. Herkömmlich hingegen werden sämtliche Sicherheitsfunktionen fest und unveränderlich auf dedizierter Hardware implementiert. Eine Veränderung, soweit überhaupt ohne Umbau oder Neuentwicklung darstellbar, würde als völlig unverträglich mit dem zugrundeliegenden Sicherheitskonzept angesehen. Das gilt schon für eine einmalige Implementierung und erst recht dynamische Änderungen zur Laufzeit. Im Gegenteil wurde bisher stets alles daran gesetzt, mit durchaus großem Aufwand und zahlreichen komplexen Einzelmaßnahmen, dass die Sicherheitsfunktion anfangs wie über die gesamte Betriebszeit eine wohldefinierte und unveränderte Umgebung vorfindet.

Die Ausführungsumgebung ist bevorzugt dafür ausgebildet, die einer Logikeinheit zugewiesenen Ressourcen zu verändern. Dies kann die Logikeinheit bei einer schnelleren Verarbeitung unterstützen, aber auch Ressourcen für andere Logikeinheiten freistellen. Besondere Möglichkeiten, um mehr Ressourcen bereitzustellen, sind die Verschiebung einer Logikeinheit auf einen anderen Rechenknoten oder die Erzeugung einer weiteren Instanz oder Kopie der Logikeinheit, wobei eine Logikeinheit für letzteres bevorzugt für eine parallelisierbare Ausführung ausgebildet ist.

Die Ausführungsumgebung hält bevorzugt eine Konfigurationsinformation oder Konfigurationsdatei über die Logikeinheiten gespeichert. Anhand der Konfigurationsinformation wird Buch über die vorhandenen Logikeinheiten geführt beziehungsweise vorgegeben, welche Logikeinheiten in welchem Zeitablauf und mit welchen Ressourcen ausgeführt werden sollen und wie sie möglicherweise miteinander in Beziehung stehen.

Die Konfigurationsinformation ist besonders bevorzugt mittels Signaturen oder Blockchain-Datensätzen gegen Manipulation gesichert. Eine solche Manipulation kann absichtlich oder unabsichtlich sein, jedenfalls sollte sich in einer Sicherheitsanwendung die Konfiguration der Logikdateien keinesfalls unbemerkt verändern.

Die Ausführungsumgebung weist bevorzugt mindestens eine Mastereinheit auf, die mit den Rechenknoten kommuniziert und sie koordiniert. Die Mastereinheit kann für Redundanz und/oder verteilte Zuständigkeit auch mehrere Untereinheiten aufweisen oder von Knotenmanagereinheiten der Rechenknoten unterstützt werden und auf einem eigenen Rechenknoten oder einem Rechenknoten gemeinsam mit Logikeinheiten implementiert sein.

Der mindestens eine Rechenknoten weist bevorzugt eine Knotenmanagereinheit zur Kommunikation mit anderen Rechenknoten und der Ausführungsumgebung auf. Diese Knotenmanagereinheit ist für die Verwaltung und Koordinaten des zugehörigen Rechenknotens, insbesondere die Logikeinheiten dieses Rechenknotens sowie für das Zusammenspiel mit den anderen Rechenknoten und der Mastereinheit verantwortlich. Sie kann in praktisch beliebiger Verteilung auch Aufgaben der Mastereinheit übernehmen.

Der mindestens eine Rechenknoten weist bevorzugt mindestens einen Unterknoten auf, und die Logikeinheiten sind einem Unterknoten zugeordnet. Damit werden die Rechenknoten ein weiteres Mal in sich strukturiert, um Logikeinheiten in einem Unterknoten zusammenzufassen. Dieses Konzept verfolgt auch Kubernetes in Form der Pods.

Die mindestens eine Logikeinheit ist bevorzugt als Container implementiert. Damit sind die Logikeinheiten abgekapselt oder containerisiert und werden auf nahezu beliebiger Hardware lauffähig. Der sonst übliche enge Zusammenhang zwischen Sicherheitsfunktion und deren Implementierung auf fester Hardware ist aufgebrochen, womit sich die Flexibilität und Prozessstabilität ganz erheblich erhöht. Die Ausführungsumgebung koordiniert oder orchestriert die Container mit den darin befindlichen Logikeinheiten untereinander. Es gibt mindestens zwei Abstraktionsschichten, einmal eine jeweilige Containerschicht (container runtime) und zum zweiten eine darüber liegende Orchestrierungsschicht (orchestration layer) der Ausführungsumgebung.

Die Ausführungsumgebung ist bevorzugt auf mindestens einem Sensor, einer speicherprogrammierbaren Steuerung, einer Maschinensteuerung, einer Rechnervorrichtung in einem lokalen Netzwerk, einem Edge-Device und/oder in einer Cloud implementiert. Die zugrundeliegende Hardwarelandschaft ist mit anderen Worten praktisch beliebig, was ein ganz großer Vorteil des erfindungsgemäßen Ansatzes ist. Die Ausführungsumgebung arbeitet abstrakt mit Rechenknoten, die darunterliegende Hardware kann sich sehr heterogen zusammensetzen. Insbesondere werden der Sicherheitstechnik auch Edge- oder Cloud-Architekturen zugänglich, ohne dabei auf die vertraute Auswertungshardware von (sicheren) Sensoren oder Steuerungen verzichten zu müssen.

Die Ausführungsumgebung ist bevorzugt dafür ausgebildet, Rechenknoten einzubinden und/oder auszuschließen. Die Hardwareumgebung darf sich damit ändern, die Ausführungsumgebung ist in der Lage, damit umzugehen und neue oder angepasste Rechenknoten zu bilden. Es ist demnach möglich, neue Hardware anzuschließen oder Hardware auszutauschen, insbesondere zum Ersatz bei (Teil-)ausfall sowie zum Aufrüsten und zur Bereitstellung zusätzlicher Rechen- und Speicherressourcen. Die Logikeinheiten können auf den von der Ausführungsumgebung abstrahierten Rechenknoten trotz einer möglicherweise auch rabiat veränderten Hardwarekonfiguration weiterarbeiten.

Mindestens eine Logikeinheit ist bevorzugt als Automatisierungseinheit ausgebildet, die aus den Sensordaten eine für eine Automatisierungsaufgabe relevante Information und/oder einen Steuerungsbefehl für die Maschine erzeugt, wobei Information und Steuerungsbefehl nicht sicherheitsrelevant sind. Die Ausführungsumgebung unterstützt somit eine weitere Art von Logikeinheit, die anhand der Sensordaten nicht sicherheitsrelevante Zusatzfunktionen bietet. Es geht bei solchen Automatisierungsaufgaben nicht um den Personenschutz oder die Unfallvermeidung, und demgemäß müssen insoweit keine Sicherheitsnormen erfüllt werden. Typische Automatisierungsaufgaben sind Qualitäts- und Ablaufkontrollen, Objekterkennung zum Greifen, Sortieren oder für sonstige Bearbeitungsschritte, Klassifikationen und dergleichen. Auch eine Automatisierungseinheit profitiert davon, wenn die Ausführungsumgebung ihr flexible Ressourcen zuweist und sie daraufhin überwacht, ob sie ihre Aufgabe noch ausführt, und beispielsweise gegebenenfalls die entsprechende Logikeinheit neu startet, auf einen anderen Rechenknoten schiebt oder eine Kopie der Logikeinheit ins Leben ruft. Dabei geht es dann aber um Verfügbarkeit mit Vermeidung von Stillständen und der Unterstützung ordnungsgemäßer Abläufe, die für den Betreiber der Maschine durchaus sehr relevant sind, aber nichts mit Sicherheit zu tun haben. Es ist denkbar, eine Automatisierungseinheit in die Zustands- und Ausführungsüberwachung der Diagnoseeinheit einzubinden, da verlässliche Automatisierungsfunktionen ebenfalls einen Mehrwert bieten können, auch wenn damit ein Sicherheitsniveau eingehalten wird, das an dieser Stelle womöglich zu hoch ist.

Die Diagnoseeinheit ist bevorzugt dafür ausgebildet, situationsbezogen festzustellen, ob eine Fehlfunktion sicherheitsrelevant ist. Die Zustände der vorhandenen Sicherheitsfunktionseinheiten beziehungsweise der Ausführungsablauf können abhängig von den gegenwärtigen Umständen unterschiedlich bewertet werden. Beispielsweise stellt ein Eingriff eines Körperteils in einen Arbeitsbereich eines Roboters ausnahmsweise keine Gefahr dar, wenn zugleich garantiert ist, dass der Roboter momentan sicher in einem begrenzten Koordinatenbereich bleibt, der die Eingriffsstelle nicht umfasst. Unter solchen situationsbezogenen Randbedingungen ist sogar denkbar, dass Sicherheitsfunktionseinheiten und Automatisierungseinheiten dynamisch ihre Rollen wechseln.

Die mindestens eine Logikeinheit, die als Diagnoseeinheit ausgebildet ist, zugleich als Sicherheitsfunktionseinheit ausgebildet ist, und die Sicherheitsfunktionseinheit und die Diagnoseeinheit innerhalb der Logikeinheit, die als Diagnoseeinheit ausgebildet ist, miteinander kommunizieren. Dies kann den Aufwand der Kommunikation reduzieren. Die mindestens eine Logikeinheit, die als Diagnoseeinheit ausgebildet ist, kann auch als Program Supervisor bezeichnet werden.

Die mindestens eine Logikeinheit, die als Diagnoseeinheit ausgebildet ist, weist eine Schnittstelle für den Empfang von Ausführungskontextereignissen auf. Diese Schnittstelle kann als "Diagnostic Sink" bezeichnet werden.

Die Schnittstelle und Diagnose-Software-Module (welche kurz auch als Diagnosemodule bezeichnet werden können) können über In-Memory miteinander kommunizieren, da die Ausführung im selben Container stattfinden kann.

Die Kommunikation zwischen der Schnittstelle und den Diagnose-Software-Modulen kann ein Senden der für das jeweilige Diagnose-Software-Modul relevanten Daten von der Schnittstelle an das Diagnose-Software-Module aufweisen.

Die Kommunikation zwischen der Schnittstelle und den Diagnose-Software-Modulen kann ein Übermitteln einer Bestätigung vom Diagnosemodul zur Schnittstelle aufweisen.

Die Verteilung und Extraktion der für ein Diagnosemodul relevanten Daten aus einem Ausführungskontextereignisses kann auf Basis einer zuvor festgelegten Konfiguration geschehen. Diese Konfiguration kann über eine Tabelle, beispielsweise Tabelle 1 wie unten dargestellt, definiert sein. Die Konfiguration kann eine Sequenznummer und/ oder eine Identifikation und/ oder eine Prüfsumme und/ oder einen Sender und/ oder eine Zuordnung von Diagnosedaten zu Diagnosemodulen definieren.

Die Sicherheitsvorrichtung weist bevorzugt eine Abschalteinheit auf, die dafür ausgebildet ist, auf Anweisung der Diagnoseeinheit im Falle einer sicherheitsrelevanten Fehlfunktion oder auf Anweisung einer Sicherheitsfunktionseinheit bei Erkennung einer Gefahrensituation anhand der ausgewerteten Sensordaten die Maschine in einen sicheren Zustand zu versetzen. Die Abschalteinheit beziehungsweise der Abschaltdienst kümmert sich somit darum, dass die Maschine tatsächlich abgesichert wird, wenn die Diagnoseeinheit oder eine Sicherheitsfunktionseinheit das anfordert, vorzugsweise durch ein entsprechendes Signal an die Maschine oder deren Maschinensteuerung. Je nach Situation wird der sichere Zustand beispielsweise durch ein Verlangsamen, einen besonderen Arbeitsmodus der Maschine beispielsweise mit begrenzter Bewegungsfreiheit oder Bewegungsvielfalt, ein Ausweichen oder ein Anhalten erreicht. Die Abschalteinheit kann als Logikeinheit implementiert und in eine Diagnose einbezogen sein. Bevorzugt erhält die Abschalteinheit regelmäßig ein Signal von der Diagnoseeinheit, dass alles in Ordnung ist, und reagiert auf ein Ausbleiben dieses Signals ebenso mit einer Absicherungsmaßnahme wie im Falle einer expliziten Absicherungsanforderung.

Die Ausführungsumgebung weist vorzugsweise ein Nachrichtensystem auf, über das die mindestens eine Sicherheitsfunktionseinheit Zustandsnachrichten und Ausführungsnachrichten an die Diagnoseeinheit übermitteln. Beispielsweise ist das Nachrichtensystem mit zwei Nachrichtenkanälen ausgebildet, um Zustandsnachrichten und Ausführungsnachrichten nebeneinander zu übermitteln. Es gibt damit zwei Nachrichtenflüsse, um die Zustandsüberwachung und Ausführungsüberwachung voneinander separiert halten zu können. Bevorzugt jedoch kommuniziert die Sicherheitsfunktionseinheit die Zustandsnachrichten und Ausführungsnachrichten an die Diagnoseeinheit über In-Memory-Datenaustausch innerhalb eines Containers, der sowohl die Sicherheitsfunktionseinheit als auch die Diagnoseeinheit bereitstellt.

Die mindestens eine Sicherheitsfunktionseinheit ist bevorzugt dafür ausgebildet, regelmäßig eine Zustandsnachricht zu übermitteln und/oder ereignisbasiert für eine jeweilige Ausführung ihrer Sicherheitsfunktion eine Ausführungsnachricht zu übermitteln. Der Zustand der Sicherheitsfunktionseinheit wird damit kontinuierlich überwacht, mit einer Feinkörnigkeit, die letztlich durch das gewünschte Sicherheitsniveau vorgegeben ist. Regelmäßig kann zyklisch bedeuten, ist aber etwas weicher. Es genügt, wenn jeweils spätestens nach einer vorgegebenen Zeitspanne der Zustand wieder bekannt wird, die Zeitintervalle zwischen zwei Zustandsnachrichten können aber in diesem Rahmen schwanken. Eine Ausführungsnachricht liefert jeweils dann neue Information, wenn zwischenzeitlich eine Ausführung erfolgte, so dass der Austausch von Ausführungsnachrichten ereignisbasiert implementiert sein kann. Da die Sicherheitsfunktion auf Sensordaten basiert und die Sensoren selbst häufig ihre Daten zyklisch bereitstellen, können die Auswertungsereignisse zyklisch auftreten, so dass die ereignisbasierte Abfolge letztlich auf diesem indirekten Weg doch zyklisch wird.

Die Zustandsnachricht und/oder die Ausführungsnachricht weist vorzugsweise eine Senderinformation über die sendende Sicherheitsfunktionseinheit, einen Zeitstempel, eine Sequenz und/oder eine Checksumme auf. Damit können die Zustände und Ausführungen der richtigen Logikeinheit zugeordnet und zeitlich eingeordnet werden. Die Sequenz bringt die Nachrichten beziehungsweise deren Inhalte in eine Ordnung. Mit einer Checksumme oder einer vergleichbaren Maßnahme kann sichergestellt werden, dass der Inhalt der Nachricht korrekt übermittelt wurde.

Die mindestens eine Sicherheitsfunktionseinheit ist bevorzugt für eine Selbstdiagnose ausgebildet, in der sie ihre eigenen Daten, Programme, Verarbeitungsergebnisse und/oder die Übereinstimmung mit einer Systemzeit überprüft. Daraus kann die Sicherheitsfunktionseinheit insbesondere ihren eigenen Zustand ermitteln und in einer Zustandsnachricht mitteilen. Eine Abweichung von der Systemzeit würde zu Unstimmigkeiten mit den Zeitstempeln in den Nachrichten führen und damit möglicherweise einer fehlerhaften Systemdiagnose führen. Die Selbstdiagnose genügt allein nicht, um insgesamt Sicherheit zu gewährleisten, da die Logikeinheit selbst nicht sicher ausgebildet ist, aber eine Selbstdiagnose stellt einen möglichen Baustein der Sicherheit dar.

Die Diagnoseeinheit für die Zustandsüberwachung ist bevorzugt dafür ausgebildet, eine vorgegebene Zustandserwartung für die Zustände der mindestens einen Sicherheitsfunktionseinheit abzurufen, insbesondere die Zustandserwartung anhand bisheriger Zustände, Arbeitsabläufe und/oder Arbeitsergebnisse der Logikeinheiten zu modifizieren, und die Zustandserwartung mit einem aus den Zuständen der Zustandsnachrichten abgeleiteten gegenwärtigen Gesamtzustand zu vergleichen. Die Diagnoseeinheit hat somit die Zustandserwartung für ein fehlerfreies System, wobei diese Zustandserwartung konfiguriert, anderweitig vorgegeben, fest programmiert beziehungsweise in einem Speicher bereitgestellt sein kann. Eine Zustandserwartung kann darin bestehen, überhaupt regelmäßig von allen vorhandenen Sicherheitsfunktionseinheiten eine Zustandsnachricht zu erhalten, oder dass nur bestimmte Zustände gemeldet werden, die nicht auf einen Fehler hindeuten. Die Zustandserwartung kann situationsbezogen angepasst sein. Aus den empfangenen Zustandsnachrichten werden aktuelle Zustandsinformationen ermittelt und insbesondere zu einem Gesamtzustand kombiniert, um dies mit der Zustandserwartung zu vergleichen. Eine Abweichung ist ein Hinweis auf eine sicherheitsrelevante Fehlfunktion. Dabei kann es noch Toleranzen hinsichtlich bestimmter Sicherheitsfunktionen und zeitliche Toleranzen geben. Eine durch Toleranzen, die aktuelle Situation oder eine andere vorhergesehene Ausnahme nicht erklärbare Abweichung wird vorzugsweise als sicherheitsrelevante Fehlfunktion gewertet, woraufhin die Maschine in den sicheren Zustand überführt wird.

Die Zustandsnachricht gibt vorzugsweise Auskunft darüber, ob die Zustandsnachricht übermittelnde Sicherheitsfunktionseinheit existiert, sich initialisieren konnte, ihr alle erforderlichen Ressourcen wie Datenbanken, Code, Bibliotheken, Rechenressourcen, Verbindung zum Sensor zur Verfügung stehen und/oder sie funktionsbereit ist. Dies sind Beispiele für den Inhalt einer Zustandsnachricht oder Zustände, die sich aus dem Inhalt ableiten lassen. Die Zustandsnachricht kann sich in einem summarischen OK erschöpfen, das sogar bereits durch das bloße Einlaufen eine Nachricht impliziert sein kann. Die Zustandsnachricht enthält vorzugsweise auch die oben genannten allgemeinen Informationen wie Sender, Zeitstempel und Checksumme.

Die Diagnoseeinheit für die Ausführungsüberwachung ist bevorzugt dafür ausgebildet, eine vorgegebene Ausführungserwartung für den Ausführungsablauf der mindestens einen Sicherheitsfunktionseinheit abzurufen, insbesondere die Ausführungserwartung anhand bisheriger Zustände, Arbeitsabläufe und/oder Arbeitsergebnisse der Logikeinheiten zu modifizieren, und die Ausführungserwartung mit dem aus den Ausführungsnachrichten abgeleiteten Ausführungsablauf zu vergleichen. Die Diagnoseeinheit hat somit die Ausführungserwartung an die zeitliche und logische Abfolge der Ausführungen der mindestens einen Sicherheitsfunktionseinheit. Dies wird mit der tatsächlichen Ausführungsabfolge verglichen, die sich aus den Ausführungsnachrichten ergibt. Abweichungen sind Hinweise auf eine sicherheitsrelevante Fehlfunktion. Wie schon im Falle der Zustandsüberwachung ist nicht unbedingt jede Abweichung eine Fehlfunktion und nicht jede Fehlfunktion sicherheitskritisch mit der Konsequenz einer sicherheitsgerichteten Reaktion der Maschine. Es gibt vorzugsweise Toleranzen beim Vergleich und wie mehrfach diskutiert, möglicherweise eine situationsbezogene Bewertung.

Die Diagnoseeinheit ist bevorzugt dafür ausgebildet, bei einer Bewertung des Vergleichs der Ausführungserwartung mit dem aus den Ausführungsnachrichten abgeleiteten Ausführungsablauf mindestens eines der folgenden Kriterien zu berücksichtigen: eine Ausführungsreihenfolge, das Ausbleiben einer Ausführung, ein zusätzliches Ausführen, eine Abweichung der Ausführungen von einem Zeitraster, eine zu kurze Ausführungsdauer oder eine zu lange Ausführungsdauer. Die Abweichung von einem Zeitraster kann als ein besonders relevanter Sonderfall des Ausbleibens oder Hinzukommens einer Ausführung verstanden werden. Viele dieser Kriterien führen noch nicht zwingend zu einer sicherheitsrelevanten Überwachungslücke. Sie sind aber ein Hinweis, dass das System sich anders verhält als geplant, und wenn die Abweichung nicht im Sicherheitskonzept vorgesehen und damit sicher beherrscht ist, sollte vorsorglich die Maschine in den sicheren Zustand überführt werden.

Die Ausführungsnachricht weist bevorzugt eine Ausführungsinformation über die jeweils letzte Ausführung der Sicherheitsfunktion auf, insbesondere mit Startzeit und/oder Ausführungsdauer. Die Ausführungsdauer kann natürlich auch mittelbar beispielsweise durch eine Endzeit übermittelt werden. Hinzu kommen vorzugsweise die allgemeinen Informationen wie Sender, Zeitstempel der Nachricht und/oder Checksumme. Falls eine Sicherheitsfunktionseinheit mehrere Sicherheitsfunktionen ausführt, kann eine entsprechende Identifikationsnummer der Sicherheitsfunktion ergänzt werden. Allerdings ist vorzugsweise jede Sicherheitsfunktionseinheit nur für eine Sicherheitsfunktion zuständig; bei Bedarf für eine weitere Sicherheitsfunktion kann einfach eine weitere Sicherheitsfunktionseinheit erzeugt werden. Eine Ausführungsnachricht kann auch Ausführungsergebnisse enthalten, beispielsweise für gezielte Tests, in denen geprüft wird, ob testweise eingespeiste Eingangsdaten, wie Sensordaten oder emulierte Sensordaten, zu einem erwarteten Ausführungsergebnis führen. Das Konzept der Zustands- und Ausführungsüberwachung ist aber vorzugsweise unabhängig von konkreten Inhalten, was wiederum nicht ausschließt, dass derartige Tests zusätzlich stattfinden, wobei dafür zur Entkopplung auch eigene Testdiagnoseeinheiten und Testnachrichten verwendet werden können.

Die Ausführungsumgebung weist bevorzugt einen Aggregator auf, der logisch zwischen der mindestens einen Sicherheitsfunktionseinheit und der Diagnoseeinheit angeordnet und dafür ausgebildet ist, die Ausführungsnachrichten zu empfangen und daraus den Ausführungsablauf mit einer Reihenfolge und/oder Dauer der Ausführungen der Sicherheitsfunktionen der mindestens einen Sicherheitsfunktionseinheit zu erzeugen. Der Aggregator übernimmt damit eine Teilaufgabe der Ausführungsüberwachung, die alternativ auch in der Diagnoseeinheit implementiert sein kann. Nach der Aggregation sind die einzelnen Ausführungsnachrichten schon zu dem Ausführungsablauf kombiniert. Der Aggregator arbeitet vorzugsweise in Echtzeit, es geht hier nicht nur darum, Daten mit Hinweisen auf Flaschenhälse und dergleichen für eine nachträgliche händische Optimierung bereitzustellen, sondern um einen Teil der Sicherheitsüberwachung und damit letztlich Unfallvermeidung.

Der mindestens eine Sensor ist bevorzugt als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet, insbesondere Temperatur-, Durchfluss-, Füllstand- oder Drucksensor, wobei die Sicherheitsvorrichtung insbesondere eine Vielzahl gleicher oder unterschiedlicher Sensoren aufweist. Dies sind einige Beispiele für Sensoren, die für eine Sicherheitsanwendung relevante Sensordaten liefern können. Die konkrete Auswahl des Sensors oder der Sensoren hängt von der jeweiligen Sicherheitsanwendung ab. Die Sensoren können bereits selbst als Sicherheitssensoren ausgebildet sein. Es ist aber erfindungsgemäß ausdrücklich alternativ vorgesehen, die Sicherheit erst nachgelagert durch Tests, zusätzliche Sensorik beziehungsweise (diversitäre) Redundanz oder Mehrkanaligkeit und dergleichen zu erzielen sowie sichere und nicht sichere Sensoren gleicher oder unterschiedlicher Sensorprinzipien miteinander zu kombinieren. Beispielsweise würde ein ausgefallener Sensor keine Sensordaten liefern, dies würde sich in den Zustands- und Ausführungsnachrichten der für den Sensor zuständigen Sicherheitsfunktionseinheit niederschlagen und damit von der Diagnoseeinheit in der Zustands- und Ausführungsüberwachung bemerkt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer Sicherheitsvorrichtung;
- Fig. 2: eine schematische Darstellung einer Ausführungsumgebung der Sicherheitsvorrichtung;
- Fig. 3: eine schematische Darstellung einer Ausführungsumgebung beispielhaft mit zwei Rechenknoten;
- Fig. 4: eine schematische Darstellung einer Ausführungsumgebung ähnlich Figur 3 in einer speziellen Ausführungsform unter Verwendung von Kubernetes;
- Fig. 5: eine schematische Darstellung des doppelten Nachrichtenflusses mit Zustands- und Ausführungsnachrichten zu einer System-Diagnoseeinheit;
- Fig. 6: eine schematische Darstellung einer Zustandsüberwachung auf Basis der Zustandsnachrichten;
- Fig. 7: eine schematische Darstellung einer Ausführungsüberwachung auf Basis der Ausführungsnachrichten;
- Fig. 8: den Program Supervisor in einer beispielhaften Anwendung; und
- Fig. 9: Diagramme zur Veranschaulichung der Latenzreduktion durch den Program Supervisor im Vergleich zu einem eines zweikanaligen Nachrichtensystems.

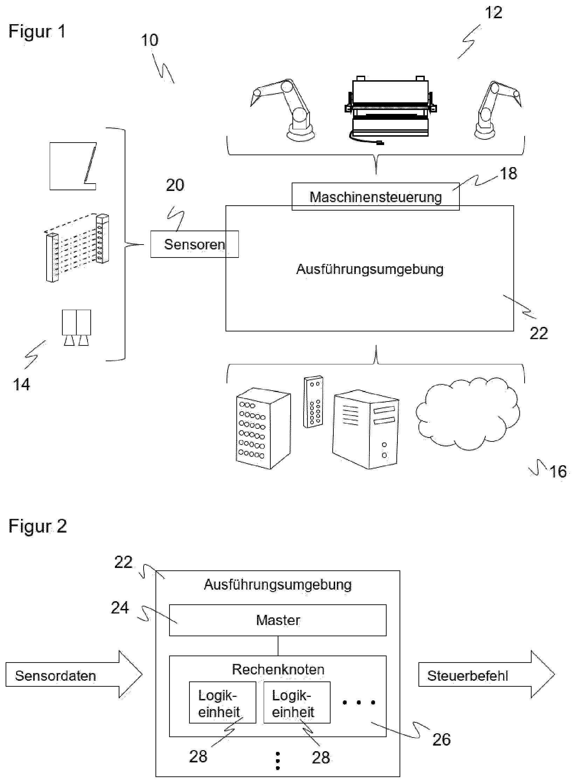

Figur 1 zeigt eine Übersichtsdarstellung einer Sicherheitsvorrichtung 10. Die Begriffe Sicherheit sowie sicher und nicht sicher sind weiterhin so zu verstehen, dass entsprechende Komponenten, Übertragungswege und Auswertungen die einleitend genannten Kriterien von Sicherheitsnormen erfüllen beziehungsweise nicht erfüllen.

Die Sicherheitsvorrichtung 10 lässt sich grob in drei Blöcke mit mindestens einer zu überwachenden Maschine 12, mindestens einem Sensor 14 zur Erzeugung von Sensordaten der überwachten Maschine 12 und mindestens einer Hardwarekomponente 16 mit Rechen- und Speicherressourcen für die Steuer- und Auswertungsfunktionalität zur Auswertung der Sensordaten und Auslösen einer etwaigen sicherheitsgerichteten Reaktion der Maschine 12 unterteilen. Maschine 12, Sensor 14 und Hardwarekomponente 16 werden im Folgenden manchmal im Singular und manchmal Plural angesprochen, was ausdrücklich die jeweils anderen Ausführungsformen mit nur einer jeweiligen Einheit 12, 14, 16 oder mehreren solchen Einheiten 12, 14, 16 einschließen soll.

An den Rändern sind jeweils Beispiele für die drei Blöcke dargestellt. Bei der vorzugsweise industriell eingesetzten Maschine 12 handelt es sich beispielsweise um eine Bearbeitungsmaschine, eine Fertigungsstraße, eine Sortieranlage, eine Prozessanlage, einen Roboter oder ein Fahrzeug, das schienengebunden sein kann oder nicht und insbesondere führerlos ist (AGC, Automated Guided Cart, AGV, Automated Guided Vehicle, AMR, Autonomous Mobile Robot).

Als beispielhafte Sensoren 14 sind ein Laserscanner, ein Lichtgitter und eine Stereokamera als Vertreter optoelektronischer Sensoren dargestellt, zu denen weitere Sensoren wie Lichttaster, Lichtschranken, FMVW-LIDAR oder Kameras mit jeglicher 2D- oder 3D-Erfassung zählen, wie Projektions- oder Lichtlaufzeitverfahren. Einige weiterhin nicht abschließende Beispiele für Sensoren 14 sind UWB-Sensoren, Ultraschallsensoren, Trägheitssensoren, kapazitive, magnetische oder induktive Sensoren, oder Prozessgrößen-sensoren, wie Temperatur-, Durchfluss-, Füllstand- oder Drucksensor. Diese Sensoren 14 können je nach Sicherheitsvorrichtung 10 in beliebiger Anzahl vorhanden sein und beliebig miteinander kombiniert werden.

Denkbare Hardwarekomponenten 16 sind Steuerungen (PLC, Programmable Logic Controller beziehungsweise SPS, speicherprogrammierbare Steuerung), ein Rechner in einem lokalen Netzwerk, insbesondere ein Edge-Device, oder eine eigene oder von Dritten betriebene Cloud, und ganz allgemein jegliche Hardware, die Ressourcen für digitale Datenverarbeitung bereitstellt.

Im Inneren der Figur 1 sind die drei Blöcke nochmals aufgegriffen. Die Maschine 12 ist vorzugsweise über ihre Maschinensteuerung 18 mit der Sicherheitsvorrichtung 10 verbunden, wobei die Maschinensteuerung im Falle eines Roboters eine Robotersteuerung ist, im Falle eines Fahrzeugs eine Fahrzeugsteuerung, in einer Prozessanlage eine Prozesssteuerung und ähnlich für andere Maschinen 12. Die im Inneren als Block 20 zusammengefassten Sensoren 14 erzeugen nicht nur Sensordaten, sondern weisen auch eine nicht einzeln gezeigte Schnittstelle auf, um die Sensordaten in roher oder (vor)verarbeiteter Form auszugeben sowie in aller Regel eine eigene Steuer- und Auswertungseinheit, also eine eigene Hardwarekomponente zur digitalen Datenverarbeitung.

Eine Ausführungsumgebung 22 ist ein zusammenfassender Begriff für eine Verarbeitungseinheit, welche unter anderem die Datenverarbeitung der Sensordaten leistet, um daraus Steuerbefehle an die Maschine 12 oder sonstige sicherheitsrelevante und weitere Informationen zu gewinnen. Die Ausführungsumgebung 22 ist auf den Hardware-komponenten 16 implementiert und wird nachfolgend unter Bezugnahme auf die Figuren 2 bis 4 noch näher erläutert. Erfindungsgemäß ist nicht festgelegt, auf welcher Hardware die Ausführungsumgebung 22 ausgeführt wird. Die obige Auflistung möglicher Hardwarekomponenten nennt einige Beispiele, die beliebig kombinierbar sind. Ferner ist die Ausführungsumgebung 22 absichtlich mit Überlapp zu der Maschinensteuerung 18 und dem Block 20 der Sensoren 14 eingezeichnet, da auch interne Rechen- und Speicherressourcen der Sensoren 14 und/oder der Maschine 12 von der Ausführungsumgebung 22 genutzt werden können, wiederum in beliebiger Kombination einschließlich der Möglichkeit, dass es gar keine zusätzlichen Hardwarekomponenten 16 außerhalb der Maschine 12 und der Sensoren 14 gibt. Im Folgenden wird davon ausgegangen, dass die Hardwarekomponenten 16 die Rechen- und Speicherressourcen stellen, damit ist dann eine Einbeziehung interner Hardware von Maschine 12 und/oder Sensoren 14 mit gemeint.

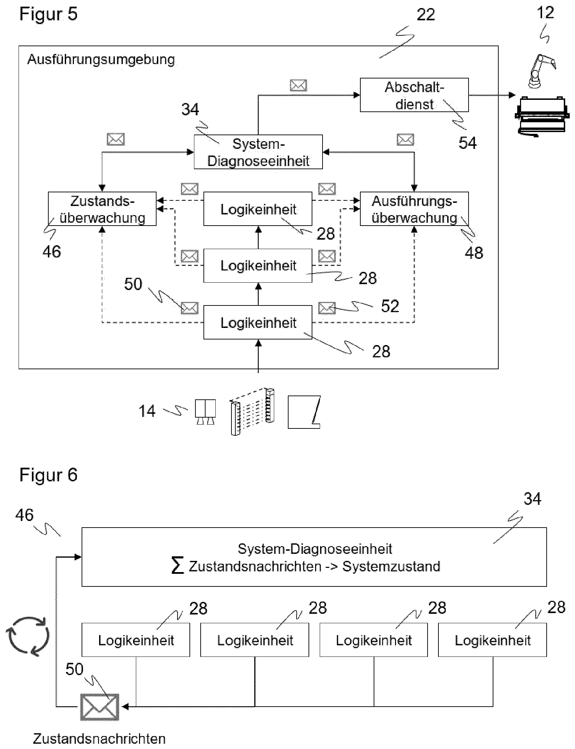

Die Sicherheitsvorrichtung 10 und insbesondere die Ausführungsumgebung 22 stellt nun Sicherheitsfunktionen und Diagnosefunktionen bereit. Eine Sicherheitsfunktion nimmt den Strom zeitlich aufeinanderfolgender Mess- und Ereignisinformationen mit den Sensordaten entgegen und erzeugt entsprechende Auswertungsergebnisse insbesondere in Form von Steuerungssignalen für die Maschine 12. Zudem können Selbstdiagnoseinformationen, Diagnoseinformationen eines Sensors 14 oder Übersichtsinformationen gewonnen werden. Davon abzugrenzen sind die eigentlichen Diagnosefunktionen, mit denen im Rahmen dieser Beschreibung die Überwachung einer Sicherheitsfunktion bezeichnet ist, wie später unter Bezugnahme auf die Figuren 5 bis 7 noch im Detail erläutert. Neben diesen sicherheitsrelevanten Funktionen oder sicheren Automatisierungsfunktionen sind als weitere Option nicht sichere Automatisierungsfunktionen denkbar.

Die Sicherheitsvorrichtung 10 erreicht eine hohe Verfügbarkeit und Robustheit gegenüber unvorhergesehenen internen wie externen Ereignissen, indem Sicherheitsfunktionen als Dienste oder Dienstleistungen der Hardwarekomponenten 16 erbracht werden. Die flexible Zusammensetzung der Hardwarekomponenten 16 und vorzugsweise deren Vernetzung im lokalen oder nicht lokalen Netzwerk beziehungsweise in eine Cloud ermöglichen eine Redundanz und Leistungs-Elastizität, so dass sehr robust mit Unterbrechungen, Störungen und Anforderungsspitzen umgegangen werden kann. Die Sicherheitsvorrichtung 10 erkennt, sobald Fehler nicht mehr aufgefangen werden und damit sicherheitsrelevant werden, und leitet dann eine situationsgerechte Reaktion ein, mit der die Maschine 12 erforderlichenfalls in einen sicheren Zustand überführt wird. Dazu wird die Maschine 12 beispielsweise angehalten, verlangsamt, sie weicht aus oder arbeitet in einem ungefährlichen Modus. Es sei nochmals klargestellt, dass es zwei Klassen von Ereignissen gibt, die eine sicherheitsgerichtete Reaktion auslösen können: zum einen ein als gefährlich eingestuftes Ereignis, das sich aus den Sensordaten ergibt, und zum anderen das Aufdecken eines sicherheitsrelevanten Fehlers.

Figur 2 zeigt eine schematische Darstellung der Ausführungsumgebung 22. Aufgabe der Ausführungsumgebung 22 ist letztlich, aus Sensordaten einen Steuerbefehl abzuleiten, insbesondere ein Sicherheitssignal, das eine sicherheitsgerichtete Reaktion der Maschine 12 auslöst. Die Ausführungsumgebung 22 weist einen Master 24 und mindestens einen Rechenknoten 26 auf. Die erforderliche Rechen- und Speicherkapazität für Master 24 und Rechenknoten 26 stellen die Hardwarekomponenten 16 bereit, die Ausführungsumgebung 22 kann sich transparent über eine Vielzahl von Hardwarekomponenten 16 erstrecken. Ein Rechenknoten 26 ist dabei abstrakt oder virtuell zu verstehen, es gibt nicht notwendig eine 1:1-Beziehung zwischen einem Rechenknoten 26 und einer Hardwarekomponente 16, sondern eine Hardwarekomponente 16 kann mehrere Rechenknoten 26 bereitstellen oder umgekehrt ein Rechenknoten 26 auf mehrere Hardwarekomponenten 16 verteilt sein. Diese Verteilung gilt analog für den Master 24.

Ein Rechenknoten 26 weist eine oder mehrere Logikeinheiten 28 auf. Eine Logikeinheit 28 ist eine in sich abgeschlossene funktionale Einheit, die Informationen entgegennimmt, diese zusammenführt, transformiert, umgestaltet oder allgemein zu einer neuen Information verarbeitet und dann zur Visualisierung, als Steuerbefehl oder zur weiteren Verarbeitung möglichen Abnehmern zur Verfügung stellt, insbesondere weiteren Logikeinheiten 28 oder einer Maschinensteuerung 12. Im Rahmen dieser Beschreibung 20 sind vornehmlich drei Arten von Logikeinheiten 28 zu unterscheiden, die schon kurz angesprochen wurden, nämlich Sicherheitsfunktionseinheiten, Diagnoseeinheiten und optional Automatisierungseinheiten, die nicht zur Sicherheit beitragen, aber die Integration von sonstigen Automatisierungsaufgaben in die Gesamtanwendung ermöglichen.

Die Ausführungsumgebung 22 aktiviert die jeweils benötigten Logikeinheiten 28 und sorgt für deren geordneten Betrieb. Hierzu weist sie den jeweiligen Logikeinheiten 28 die benötigten Ressourcen auf den zur Verfügung stehenden Rechenknoten 26 beziehungsweise Hardwarekomponenten 26 zu und überwacht die Aktivität sowie den Ressourcenbedarf aller Logikeinheiten 28. Vorzugsweise erkennt die Ausführungsumgebung 22, wenn eine Logikeinheit 28 nicht mehr aktiv ist oder es zu Unterbrechungen der Ausführungsumgebung 22 oder der Logikeinheit 28 kam. Sie versucht dann, die Logikeinheit 28 zu reaktivieren und erzeugt eine neue Kopie der Logikeinheit 28, wenn das nicht möglich ist, um so den geordneten Betrieb zu wahren. Das ist allerdings ein Mechanismus, der den Anforderungen an funktionale Sicherheit nicht genügt und nur zum Tragen kommt, sofern die noch unter Bezugnahme auf die Figuren 5 bis 7 zu erläuternde Systemdiagnose nicht zuvor einen sicherheitsrelevanten Fehler aufdeckt, oder beispielsweise während einer Initialisierungs- oder Wiederanlaufphase, in der ohnehin die Maschine 12 noch ruht.

Unterbrechungen können vorhergesehen wie unvorhergesehen sein. Beispielhafte Ursachen sind Fehler in der Infrastruktur, also den Hardwarekomponenten 16, deren Betriebssystem oder den Netzwerkverbindungen, weiterhin versehentliche Fehlbedienungen oder Manipulationen oder der vollständige Verbrauch der Ressourcen einer Hardwarekomponente 16. Kann eine Logikeinheit 28 alle erforderlichen, insbesondere sicherheitsrelevanten Informationen nicht oder jedenfalls nicht schnell genug verarbeiten, so kann die Ausführungsumgebung 22 zusätzliche Kopien der betroffenen Logikeinheit 28 erstellen, um so die Verarbeitung der Informationen weiter zu gewährleisten. Auf diese Weise sorgt die Ausführungsumgebung 22 dafür, dass die Logikeinheit 28 ihre Funktion mit einer erwarteten Qualität und Verfügbarkeit erbringt. Auch solche Reparatur- und Nachbesserungsmaßnahmen sind entsprechend den Bemerkungen im Vorabsatz kein Ersatz der noch zu beschreibenden Systemdiagnose.

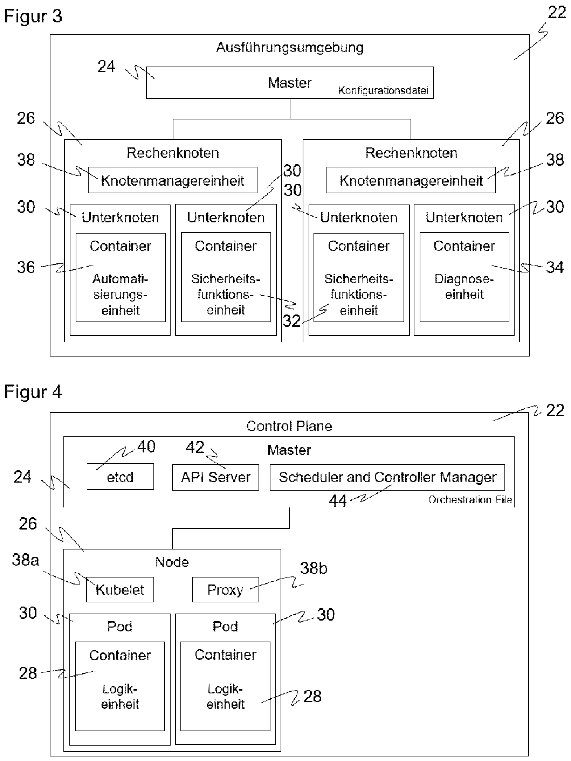

Figur 3 zeigt nochmals eine weitere, vorteilhaft ausdifferenzierte Ausführungsform der Ausführungsumgebung 22 der Sicherheitsvorrichtung 10. Der Master 24 bildet die Verwaltungs- und Kommunikationszentrale. Darin ist eine Konfigurationsinformation beziehungsweise Konfigurationsdatei über die vorhandenen Logikeinheiten 28 gespeichert, so dass der Master 24 die erforderlichen Kenntnisse über die Konfiguration hat, insbesondere welche Logikeinheiten 28 es gibt und geben soll, auf welchen Rechenknoten 26 sie zu finden sind und in welchem Zeitablauf sie Ressourcen erhalten und aufgerufen werden. Die Konfigurationsdatei ist bevorzugt über Signaturen gegen absichtliche und unabsichtliche Manipulationen abgesichert, beispielsweise über Blockchaintechnologien. Hier trifft sich die Sicherheitstechnik (Safety) vorteilhaft mit der Datenintegrität ((Cyber-)Security), denn auf diese Weise werden Angriffe abgewehrt oder jedenfalls erkannt, die unabsehbare Unfallfolgen nach sich ziehen könnten.

Die Rechenknoten 26 weisen vorteilhafterweise eine eigene Unterstruktur auf, wobei die nun beschriebenen Einheiten auch nur teilweise vorhanden sein können. Zunächst können Rechenknoten 26 nochmals in Unterknoten 30 unterteilt sein. Die gezeigte Anzahl von zwei Rechenknoten 26 mit jeweils zwei Unterknoten 30 ist rein beispielhaft, es kann beliebig viele Rechenknoten 26 mit jeweils beliebig vielen Unterknoten 30 geben, wobei die Anzahl von Unterknoten 30 über die Rechenknoten 26 variieren kann. Logikeinheiten werden vorzugsweise erst innerhalb der Unterknoten 30 erzeugt, nicht bereits auf Ebene von Rechenknoten 26. Bevorzugt sind Logikeinheiten 28 innerhalb von Containern virtualisiert, also containerisiert. Jeder Unterknoten 30 weist also einen oder mehrere Container mit vorzugsweise jeweils einer Logikeinheit 28 auf. In Figur 3 sind statt generischer Logikeinheiten 28 die drei schon angesprochenen Arten von Logikeinheiten 28 gezeigt, nämlich zwei Sicherheitsfunktionseinheiten 32, eine Diagnoseeinheit 34 und eine Automatisierungseinheit 36. Art und Anzahl der Logikeinheiten 28 sind nur ein Beispiel, wobei die noch unter Bezugnahme auf die Figuren 5 bis 7 zu erläuternde Systemdiagnose in der Tat vorzugsweise mit nur einer Diagnoseeinheit 34 auskommt. Die Zuordnung von Logikeinheiten 28 zu Unterknoten 30 und Rechenknoten 26 ist von der logischen Struktur und Zusammenarbeit der Logikeinheiten 28 gänzlich unabhängig. Aus der ohnehin beispielhaften gezeigten Anordnung von Logikeinheiten 28 lässt sich also über das inhaltliche Zusammenspiel gar nichts schließen, es wären beliebige Umverteilungen bei völlig gleicher Funktionalität möglich, dafür sorgt die Ausführungsumgebung 22.

Eine Knotenmanagereinheit 38 des Rechenknotens 26 koordiniert dessen Unterknoten 30 und die diesem Rechenknoten 26 zugewiesenen Logikeinheiten 28. Die Knotenmanagereinheit 38 kommuniziert ferner mit dem Master 24 sowie weiteren Rechenknoten 26. Die Verwaltungsaufgaben der Ausführungsumgebung 22 können praktisch beliebig auf den Master 24 und die Knotenmanagereinheit 38 verteilt werden, der Master also als verteilt implementiert angesehen werden. Vorteilhaft ist aber, wenn sich der Master um die globalen Aufgaben der Ausführungsumgebung 22 und jede Knotenmanagereinheit 38 um die lokalen Aufgaben des jeweiligen Rechenknotens 26 kümmert. Trotzdem kann der Master 24 vorzugsweise auf mehrere Hardwarekomponenten 16 verteilt oder redundant ausgebildet sein, um dessen Ausfallsicherheit zu erhöhen.

Das typische Beispiel für die Sicherheitsfunktion einer Sicherheitsfunktionseinheit 32 ist die sicherheitsgerichtete Auswertung von Sensordaten des Sensors 14. Möglich sind hier unter anderem Abstandsüberwachung (speziell Speed-and-Separation), Durchgangsüberwachung, Schutzfeldüberwachung oder Kollisionsvermeidung mit dem Ziel einer angemessenen sicherheitsgerichteten Reaktion der Maschine 12 im Gefahrenfall. Dies ist die Kernaufgabe der Sicherheitstechnik, wobei je nach Sensor 14 und Auswertungsverfahren verschiedenste Wege denkbar sind, zwischen einer normalen und einer gefährlichen Situation zu unterscheiden. Für jede Sicherheitsanwendung oder Gruppe von Sicherheitsanwendungen können passende Sicherheitsfunktionseinheiten 32 programmiert oder aus einem Pool vorhandener Sicherheitsfunktionseinheiten 32 ausgewählt werden. Wenn die Arbeitsumgebung 22 ein Sicherheitsfunktionsmodul 32 erzeugt, dann bedeutet das also keineswegs, dass die Sicherheitsfunktion damit neu geschöpft wird. Vielmehr wird auf entsprechende Bibliotheken oder dedizierte fertige Programme auf bekanntem Weg wie mittels Datenträger, Speicher oder Netzwerkverbindung zurückgegriffen. Denkbar ist, dass eine Sicherheitsfunktion teilautomatisch oder automatisch wie aus einem Baukasten fertige Programmmodule zusammenfügt und/oder passend konfiguriert wird.

Eine Diagnoseeinheit 34 kann im Sinne der einleitend genannten EP 4 040 034 A1 verstanden werden und als Watchdog fungieren oder Tests und Diagnosen unterschiedlicher Komplexität durchführen. Dadurch können sichere Algorithmen und Selbstüberwachungsmaßnahmen einer Sicherheitsfunktionseinheit 32 jedenfalls teilweise ersetzt und/ oder ergänzt werden. Dafür hat die Diagnoseeinheit 34 Erwartungen an die Ausgabe der Sicherheitsfunktionseinheit 32 zu bestimmten Zeiten, sei es in deren regulärem Betrieb oder in Antwort auf bestimmte als Test eingespeiste künstliche Sensorinformationen. Erfindungsgemäß ist eine Diagnoseeinheit 34 eingesetzt, die nicht einzelne Sicherheitsfunktionseinheiten 32 testet oder von ihnen ein bestimmtes Auswertungsergebnis erwartet, auch wenn dies ergänzend möglich ist, sondern die eine Systemdiagnose der an der Absicherung der Maschine 12 beteiligten Sicherheitsfunktionsmodule 32 durchführt, wie später unter Bezugnahme auf die Figuren 5 bis 7 erläutert.

Eine Automatisierungseinheit 36 ist eine Logikeinheit 28 für nicht sicherheitsrelevante 25 Automatisierungsaufgaben, die Sensoren 14 und Maschinen 12 oder Teile davon überwacht, allgemein Aktoren, und die basierend auf diesen Informationen (Teil-)Abläufe steuert oder Informationen darüber bereitstellt. Eine Automatisierungseinheit 36 wird von der Ausführungsumgebung im Prinzip behandelt wie jede Logikeinheit 28, und damit ist sie vorzugsweise ebenfalls containerisiert. Beispiele für Automatisierungsaufgaben sind Qualitätsprüfung, Variantensteuerung, Objekterkennung zum Greifen, Sortieren oder für sonstige Bearbeitungsschritte, Klassifikationen und dergleichen. Die Abgrenzung zu den sicherheitsrelevanten Logikeinheiten 28, also zu einer Sicherheitsfunktionseinheit 32 oder Diagnoseeinheiten 34, besteht darin, dass eine Automatisierungseinheit 36 nicht zum Unfallschutz, d.h. der sicherheitstechnischen Anwendung beiträgt. Ein verlässliches Arbeiten und eine gewisse Überwachung durch die Ausführungsumgebung 22 ist erwünscht, aber dies dient einer Erhöhung der Verfügbarkeit und damit der Produktivität und Qualität, nicht der Sicherheit. Natürlich lässt sich diese Verlässlichkeit auch dadurch herstellen, dass eine Automatisierungseinheit 36 so sorgfältig überwacht wird wie eine Sicherheitsfunktionseinheit 32, so dass dies möglich, aber nicht zwingend erforderlich ist.

Durch den Einsatz der Ausführungsumgebung 22 wird es möglich, Logikeinheiten 28 für eine Sicherheitsanwendung praktisch beliebig auf eine auch stark heterogene Umgebung der Hardwarekomponenten 26 einschließlich eines Edge-Netzwerks oder einer Cloud zu verteilen. Die Ausführungsumgebung 22 kümmert sich um alle erforderlichen Ressourcen und Rahmenbedingungen der Logikeinheiten 28. Sie ruft die erforderlichen Logikeinheiten 28 ins Leben, beendet sie oder verschiebt sie zwischen Rechenknoten 26 und Unterknoten 30.

Die Architektur der Ausführungsumgebung 22 erlaubt zudem ein nahtloses Verschmelzen von Sicherheit und Automatisierung, da Sicherheitsfunktionseinheiten 32, Diagnoseeinheiten 34 und Automatisierungseinheiten 36 in derselben Umgebung und praktisch simultan ausgeführt sowie gleichartig behandelt werden können. Im Falle eines Konflikts gibt die Ausführungsumgebung 22 vorzugsweise den Sicherheitsfunktionseinheiten 32 und Diagnoseeinheiten 34 Priorität, etwa im Falle knapper Ressourcen. In der Konfigurationsdatei können Ausführungsregeln für die Koexistenz von Logikeinheiten 28 der dreiverschiedenen Typen berücksichtigt werden.

Figur 4 zeigt eine schematische Darstellung einer Ausführungsumgebung 22 in einer Ausführungsform unter Verwendung von Kubernetes. Die Ausführungsumgebung 22 wird hier Control plane genannt. Die Figur 4 ist an die Figur 3 angelehnt, wobei ein Rechenknoten 26 der Übersicht halber weggelassen wurde und nun generische Logikeinheiten 28 stellvertretend für die drei möglichen Typen gezeigt sind. In Kubernetes besitzt der Master 24 eine Unterstruktur. Der (Kubernetes-)Master 24 ist nach wie vor nicht selbst für die Ausführung von Containern oder Logikeinheiten 28 zuständig, sondern kümmert sich um die allgemeinen Abläufe oder die Orchestrierung (orchestration layer). Dementsprechend wird die Konfigurationsdatei als orchestration file bezeichnet. Weiterhin sind eine Datenbank etcd 40 für alle relevanten Daten der Kubernetes-Umgebung, ein API-Server 42 als Schnittstelle zu Kubernetes sowie ein Scheduler and Controller Manager 44 vorhanden, der die eigentliche Orchestrierung vornimmt.

Die vorhandene Hardware wird in Nodes als Rechenknoten 26 unterteilt. In den Nodes wiederum gibt es einen oder mehrere sogenannte Pods als Unterknoten 30 und darin die Container mit den eigentlichen Micro-Services, in diesem Fall den Logikeinheiten 28 samt zugehöriger Containerlaufzeit (container runtime) und damit allen Bibliotheken und für die Logikeinheit 28 zur Laufzeit erforderlichen Abhängigkeiten. Das lokale Management leistet eine nun zweigeteilte Knotenmanagereinheit 38 mit einem sogenannten Kubelet 38a und einem Proxy 38b. Das Kubelet 38a ist ein Agent, der die eigenen Pods und Container des Nodes verwaltet. Der Proxy 38b wiederum enthält die Netzwerkregeln für die Kommunikation zwischen Nodes und mit dem Master.

Kubernetes ist eine bevorzugte, aber nicht die einzige Umsetzungsmöglichkeit für die Ausführungsumgebung 22. Als eine weitere Alternative unter mehreren wäre Docker Swarm zu nennen. Docker selbst ist keine direkte Alternative, sondern ein Werkzeug zum Erzeugen von Containern und somit sowohl mit Kubernetes als auch Docker Swarm kombinierbar, die dann die Container orchestrieren.

Figur 5 zeigt eine weitere schematische Darstellung der Ausführungsumgebung 22 zur Illustration einer Systemdiagnose durch eine Zustandsüberwachung und eine Ausführungsüberwachung. Zuständig dafür ist eine System-Diagnoseeinheit 34 als spezielle Ausprägung einer Diagnoseeinheit 34. Zu überwachen sind hier rein beispielhaft drei Logikeinheiten 28, die in einer Sequenz arbeiten, um Daten eines Sensors 14 auszuwerten. Die Erfindung ist darauf nicht beschränkt, es kann eine beliebige Anzahl Logikeinheiten 28 in beliebiger gegenseitiger Verbindung und mit oder ohne eigene Verbindung zu einem Sensor 14 sein. Die Logikeinheiten 28 sind vorzugsweise Sicherheitsfunktionseinheiten 32. Es können weitere Diagnoseeinheiten 34 vorgesehen sein, die beispielsweise in Ergänzung der Systemdiagnose dediziert bestimmte Sicherheitsfunktionseinheiten 32 überwachen oder testen. Ferner ist auch möglich, Automatisierungseinheiten 36 in die Systemdiagnose einzubinden, auch wenn dafür eine sichere Überwachung für die Gefahren- oder Unfallvermeidung an sich nicht erforderlich wäre. Auf die konkrete Ausgestaltung der Logikeinheiten 28 kommt es im Folgenden nicht an, deshalb sind die generischen Logikeinheiten 28 dargestellt.

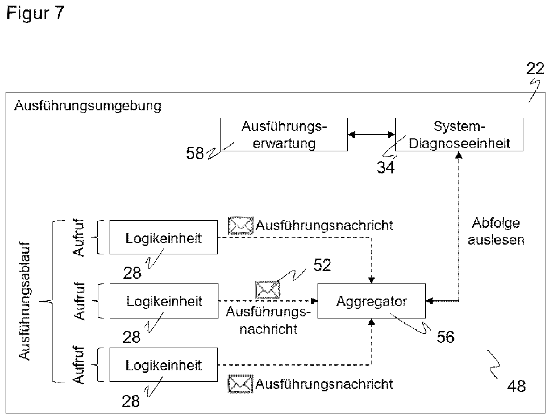

Die System-Diagnoseeinheit 34 ist für eine Zustandsüberwachung 46 und eine Ausführungsüberwachung 48 zuständig. Daraus kann eine abschließende Beurteilung des sicheren Zustands des Gesamtsystems abgeleitet werden. Die Zustandsüberwachung 46 wird im Anschluss unter Bezugnahme auf die Figur 6, die Ausführungsüberwachung 48 unter Bezugnahme auf die Figur 7 noch näher erläutert. In Figur 5 ist eine einzige System-Diagnoseeinheit 34 dargestellt, mit eigenen Blöcken für die Zustandsüberwachung 46 und die Ausführungsüberwachung 48. Das dient vor allem dem Verständnis des Konzepts, es ist ebenso denkbar, die Zustandsüberwachung 46 und die Ausführungsüberwachung als Teil der System-Diagnoseeinheit 34 aufzufassen oder die Funktionalität alternativ auf andere Weise zu verteilen.

Die Logikeinheiten 28 kommunizieren über ein Nachrichtensystem oder Nachrichtenübermittlungssystem oder über eine direkte Kommunikation (beispielsweise über In-Memory-Kommunikation) innerhalb eines gemeinsamen Containers mit der System-Diagnoseeinheit 34. Das Nachrichtensystem ist Teil der Ausführungsumgebung 22 oder dazu ergänzend implementiert. Es gibt einen doppelten Nachrichtenfluss von Status- oder Zustandsnachrichten 50 der Zustandsüberwachung 46, die über den inneren Zustand der sendenden Logikeinheit 28 informieren, und Ausführungsnachrichten 52 der Ausführungsüberwachung 52, die Auskunft über Dienst-Anforderungen beziehungsweise -Ausführungen der sendenden Logikeinheit 28 geben. Das Nachrichtensystem ist folglich gedoppelt vorgesehen oder mit zwei Nachrichtenkanälen ausgebildet. Vorzugsweise enthält jede Nachricht 50, 52 Metadaten, die den Nachrichtenstrom absichern. Diese Metadaten umfassen beispielsweise eine Senderinformation, einen Zeitstempel, eine Sequenzinformation und/oder eine Checksumme über die Nachrichteninhalte.

Die System-Diagnoseeinheit 34 ermittelt auf Basis der erhaltenen Zustandsnachrichten 50 einen Gesamtzustand der Sicherheitsvorrichtung 10 und entsprechend aus den erhaltenen Ausführungsnachrichten 52 eine Gesamtaussage über die Bearbeitung von Dienstanforderungen beziehungsweise einen Ausführungsablauf der Sicherheitsvorrichtung 10. Durch Vergleich mit zugehörigen Erwartungen werden Fehler in der Sicherheitsvorrichtung 10 aufgedeckt, und im Fehlerfall wird eine angemessene sicherheitsgerichtete Reaktion eingeleitet.

Nicht jede Unstimmigkeit bedeutet sofort einen sicherheitsrelevanten Fehler. So können Abweichungen je nach Sicherheitsniveau für eine gewisse Zeit geduldet werden, oder es werden Reparaturmechanismen versucht, um wieder in einen fehlerfreien Systemzustand zu gelangen. Dabei ist jedoch genau durch das Sicherheitskonzept spezifiziert, in welchem zeitlichen und sonstigen Rahmen Fehler vorerst nur beobachtet werden können. Weiterhin kann es Abstufungen von Fehlern geben, die unterschiedlich drastische Absicherungsmaßnahmen erfordern sowie situationsbedingte Bewertungen von Fehlern. Letzteres führt zu einem differenzierteren Begriff von Sicherheit und sicher, der die aktuelle Situation einbezieht. Der Ausfall einer sicherheitsrelevanten Komponente oder das Nichtausführen einer sicherheitsrelevanten Funktion kann unter bestimmten Voraussetzungen, d.h. situationsbezogen, noch nicht zwangsläufig einen unsicheren Systemzustand bedeuten. Beispielsweise könnte ein Sensor 14 ausgefallen sein, der einen Kollaborationsbereich mit einem Roboter überwacht, während sich der Roboter mit Sicherheit nicht in diesem Bereich aufhält, was wiederum durch eine robotereigene, sichere Koordinatenbegrenzung gewährleistet sein kann. Solche situationsbezogenen Regeln für die Bewertung, ob eine sicherheitsgerichtete Reaktion erfolgen muss, müssen der System-Diagnoseeinheit 34 dann aber ebenfalls in einer mit dem Sicherheitskonzept abgestimmten Weise bekannt sein.

Die sicherheitsgerichtete Reaktion der Maschine 12 wird vorzugsweise über einen Abschaltdienst 54 ausgelöst. Das kann eine weitere Sicherheitsfunktionseinheit 32 sein, die vorzugsweise entgegen der Darstellung in die Systemüberwachung eingebunden sein kann. Der Abschaltdienst 54 arbeitet vorzugsweise invertiert, d.h. es wird ein positives Signal von der System-Diagnoseeinheit 34 erwartet und an die Maschine 12 weitergegeben, dass die Maschine 12 arbeiten darf. Damit wird automatisch ein Ausfall der System-Diagnoseeinheit 34 oder des Abschaltdienstes 54 aufgefangen.

Die Maschine wird von dem Abschaltdienst 54 trotz seines Namens nicht zwangsläufig abgeschaltet, das ist nur die drastischste Maßnahme. Je nach Fehler kann ein sicherer Zustand bereits durch ein Verlangsamen, eine Begrenzung der Geschwindigkeit und/oder des Arbeitsraums oder dergleichen erreicht werden. Das hat dann geringere Auswirkungen auf die Produktivität. Der Abschaltdienst 54 kann auch von einer der Logikeinheiten 28 angefordert werden, wenn dort durch Auswertung der Sensordaten eine Gefahrensituation erkannt wird. Ein entsprechender Pfeil wurde in Figur 5 der Übersicht halber weggelassen.

Figur 6 zeigt eine schematische Darstellung der Zustandsüberwachung 46 auf Basis der Zustandsnachrichten 50. Vorzugsweise werden Zustandsnachrichten 50 kontinuierlich oder regelmäßig in dem Sinne an die System-Diagnoseeinheit 34 übermittelt, dass spätestens nach einer festgelegten Dauer beispielsweise von einigen Millisekunden eine Zustandsnachricht 50 von jeder überwachten Logikeinheit 28 eingehen muss. Ein fester Zyklus oder Zeittakt ist dabei denkbar, aber nicht erforderlich, zeitliche Schwankungen innerhalb des Rahmens der festgelegten Dauer sind also möglich.

Die Logikeinheiten 28 führen bevorzugt vor dem Absenden einer Zustandsnachricht 50 eine Selbstdiagnose durch. Das ist nicht zwingend in jeder Ausführungsform der Fall, eine Zustandsnachricht 50 kann ein reines Lebenszeichen oder die Weitergabe interner Zustände ohne vorherige Selbstdiagnose sein, oder die Selbstdiagnose wird seltener durchgeführt, als Zustandsnachrichten 50 gesendet werden. Die Selbstdiagnose überprüft beispielsweise die in ihrem Speicher abgelegten Daten und Programmbestandteile, die Verarbeitungsergebnisse und die Systemzeit. Entsprechend beinhalten die Zustandsnachrichten 50 Informationen über den internen Zustand der Logikeinheit 28 und geben Aufschluss darüber, ob die Logikeinheit in der Lage ist, ihre Aufgabe korrekt zu erfüllen, etwa ob die Logikeinheit 28 alle notwendigen Daten in ausreichender Zeit zur Verfügung hat. Zudem enthalten die Zustandsnachrichten 50 vorzugsweise die oben genannten Metadaten.

Die System-Diagnoseeinheit 34 interpretiert den Inhalt der Zustandsnachrichten 50 und ordnet dies den jeweiligen Logikeinheiten 28 zu. Die einzelnen Zustände der Logikeinheiten 28 werden zu einem Gesamtzustand der Sicherheitsvorrichtung 10 aus Sicherheitssicht kombiniert. Die System-Diagnoseeinheit 34 hat eine vorgegebene Erwartung, welcher Gesamtzustand in welcher Situation die Sicherheit gewährleistet. Zeigt der Vergleich mit dem aktuellen Gesamtzustand unter möglicher Berücksichtigung der bereits diskutierten Toleranzen und situationsbezogenen Anpassungen, dass diese Erwartung nicht erfüllt ist, so ist dies ein sicherheitsrelevanter Fehler. Es wird eine entsprechende Nachricht an den Abschaltdienst 54 gesendet, um die Maschine 12 in einen dem Fehler angemessenen sicheren Zustand zu überführen.

Figur 7 zeigt eine schematische Darstellung der Ausführungsüberwachung 48 auf Basis der Ausführungsnachrichten 52. Die erste Logikeinheit 28 innerhalb eines Dienstes erzeugt eine eindeutige Programmsequenzkennzeichnung, kurz Sequenz, die alle beteiligten Logikeinheiten 28 eines Dienstes bei ihrer Ausführung referenzieren. Die Sequenz wird den direkt nachfolgenden Logikeinheiten 28 nach Beendigung der jeweiligen Ausführung propagiert, so dass sich diese bei der Erstellung ihrer Ausführungsnachricht 52 darauf beziehen können. Eine Ausführungsnachricht 52 umfasst, vorzugsweise neben den oben genannten Metadaten, eine Startzeit und eine Dauer der jeweiligen Ausführung. Weitere mögliche Bestandteile einer Ausführungsnachricht 52 sind eine eindeutige Bezeichnung dessen, was ausgeführt wurde, und die Sequenz. Ausführungsnachrichten 52 werden vorzugsweise ereignisbasiert jeweils nach vollständiger Ausführung gesendet. Da häufig Sensordaten ausgewertet werden, die zyklisch bereitstehen, kann indirekt auch ein ereignisbasierter Nachrichtenstrom zyklisch oder regelmäßig im oben definierten Sinne werden.

Ein Aggregator 56 sammelt die Ausführungsnachrichten 52 und bringt die Ausführungen anhand der eindeutigen Programmsequenzkennzeichnung in eine logische und zeitliche Anordnung beziehungsweise in einen Ausführungsablauf. Somit beschreibt der Ausführungsablauf die tatsächlichen Ausführungen. Die System-Diagnoseeinheit 34 hat andererseits Zugriff auf eine Ausführungserwartung 58, d.h. einen erwarteten Ausführungsablauf. Diese Ausführungserwartung 58 ist eine Vorgabe, die typischerweise ein Sicherheitsexperte im Zusammenhang mit dem Sicherheitskonzept festgelegt hat, die aber je nach Ausführungsform noch von der System-Diagnoseeinheit 34 modifiziert werden kann. Sollte die System-Diagnoseeinheit 34 keinen Zugriff auf die Ausführungserwartung 58 haben, so ist das jedenfalls nach einer zeitlichen Toleranz ein sicherheitsrelevanter Fehler mit der Konsequenz, dass der Abschaltdienst 54 angefordert wird, um die Maschine 12 abzusichern. Aggregator 56 und Ausführungserwartung 58 sind separat dargestellt und vorzugsweise so implementiert, können aber alternativ als Teil der System-Diagnoseeinheit 34 aufgefasst werden.

Die System-Diagnoseeinheit 34 vergleicht nun im Rahmen der Ausführungsüberwachung 48 den von dem Aggregator 56 mitgeteilten Ausführungsablauf mit der Ausführungserwartung 58, um zeitliche und logische Fehler in der Bearbeitung einer Dienstanforderung zu erkennen. Bei Unstimmigkeiten können Schritte zur Stabilisierung eingeleitet werden, beziehungsweise es wird, sobald ein Fehler nicht mehr eindeutig beherrschbar ist, über den Abschaltdienst 54 die Maschine 12 abgesichert.

Einige Beispiele für überprüfte Aspekte der Ausführungsüberwachung 48 sind: Es fehlt eine Ausführung, um einen Dienst vollständig abzuarbeiten, es wurde eine unerwartete, zusätzliche Ausführung gemeldet, sei es eine unerwartete Mehrfachausführung einer am Dienst beteiligten Logikeinheit 28 oder eine Ausführung einer am Dienst nicht beteiligten Logikeinheit 28, eine Ausführungszeit ist zu kurz oder zu lang, und dies samt Quantifizierung zur Beurteilung, ob das schwerwiegend ist, die verstrichene Zeit zwischen Ausführungen von einzelnen Ausführungen einer Logikeinheit 28. Welche dieser Unstimmigkeiten sicherheitsrelevant sind, in welchem Rahmen und in welcher Situation sie noch toleriert werden können und welche angemessene Sicherungsmaßnahme jeweils eingeleitet wird, ist in der Ausführungserwartung 58 beziehungsweise der System-Diagnoseeinheit 34 hinterlegt.

Ein zweikanaliges Nachrichtensystem zur Zustands- und Ausführungsüberwachung kann mit einer vergleichsweise hohen Anzahl von Nachrichten über das Nachrichtensystem umgesetzt werden, sodass entsprechende Ressourcenkapazitäten vorhanden sein müssen, um die Nachrichtenlast zu verarbeiten. Sollten diese nicht ausreichend vorhanden sein, ist das System unter Umständen aufgrund zu hoher Latenzen nicht für Anwendungen in der industriellen Sicherheit geeignet. In einem zweikanaliges System, bei dem zwei Diagnoseeinheiten (Zustands- und Ausführungsüberwachung) Logikeinheiten überwachen, sendet jede Logikeinheit zwei Nachrichten pro Verarbeitungsschritt (eine pro Diagnoseeinheit).

Ein zweikanaliges Nachrichtensystem verursacht eine vergleichsweise hohe Nachrichtenlast und hat einen dementsprechend hohen Bedarf an benötigte Rechenressourcen sowie ggf. Latenz- und Durchsatzprobleme der Nachrichten bei hoher Systemlast. Mit jeder Logikeinheit erhöht sich die Anzahl der gesendeten Nachrichten. Bei Neuentwicklung bzw. Hinzufügen von neuen Diagnoseeinheiten ist ein weiterer Diagnosenachrichtenkanal notwendig, was die Nachrichtenlast weiter erhöht. Die Skalierbarkeit des Systems ist beschränkt (vor allem auf Rechnerumgebungen mit beschränkten Ressourcen).

In einer Ausführungsform wird anstelle eines zweikanaligen Nachrichtensystems eine Kombination von Nachrichten und deren Inhalte in einen einzigen Nachrichtenkanal bereitgestellt, wodurch die benötige Nachrichtenanzahl, um bis zu 75% reduzieren und somit weniger Systemressourcen in Anspruch genommen werden sowie die Latenz von Nachrichten reduziert werden kann.

Die erfindungsgemäße Lösung besteht daher aus einer neuen Struktur der Nachrichteninfrastruktur, die eine (deutlich) reduzierte Nachrichtenlast ermöglicht.

Die Diagnoseeinheiten existieren nicht mehr als lose gekoppelte Komponenten (Container) in der Ausführungsumgebung, sondern werden zusammen mit der System-Diagnoseeinheit in eine gemeinsame Logikeinheit (die als Program Supervisor bezeichnet werden kann) zusammengefasst. Die Komponenten für die Zustands- und Ausführungsüberwachung haben dieselbe Aufgabe/Funktionalität wie oben beschrieben.

Statt einer Aufteilung der einzelnen Diagnoseeinheiten auf verschiedene ausführbare Programme, die auf mehrere Container verteilt sind, sind die Diagnoseeinheiten im Program Supervisor lediglich Softwaremodule in einem einzigen ausführbaren Programm, das in einem einzigen Container ausgeführt wird.

Anwendungen und Dienste erfordern häufig zugehörige Funktionen wie Überwachung, Protokollierung, Konfiguration und Netzwerkdienste. Diese Randaufgaben können als separate Komponenten oder Dienste implementiert werden. Dazu können Komponenten einer Anwendung in einem separaten Prozess oder Container bereitgestellt werden, um Isolierung und Kapselung zu gewährleisten. Dieses Muster kann auch die Zusammensetzung von Anwendungen aus heterogenen Komponenten und Technologien ermöglichen.

Dieses Muster wird "Sidecar" genannt, weil es einem Beiwagen ("sidecar") ähnelt, der an einem Motorrad befestigt ist. Im Muster ist der Sidecar an eine übergeordnete Anwendung angehängt und stellt unterstützende Funktionen für die Anwendung bereit. Das "Sidecar" kann außerdem denselben Lebenszyklus wie die übergeordnete Anwendung haben und zusammen mit der übergeordneten Anwendung erstellt und außer Betrieb genommen werden.

Der Program Supervisor kann alle Diagnosedaten aus dem Sidecar (welches auch als Safety Watcher bezeichnet werden kann, und wie es in der europäischen Patentanmeldung 24176635.1 beschrieben ist) verarbeiten und diese an die verantwortlichen Software-Module (beispielsweise mittels der Diagnostic Sink) verteilen. Diese Diagnosedaten können als "Ausführungskontext" bezeichnet werden, und die Struktur des Ausführungskontext wird im Folgenden genauer beschrieben. Allgemein beinhaltet der Ausführungskontext beispielsweise die hierin beschriebenen Zustands- und Ausführungsinformationen, ist jedoch nicht darauf beschränkt.

Tabelle 1 zeigt eine beispielhafte Struktur des Ausführungskontextes.

**Tabelle 1. Struktur des Ausführungskontextereignisses**

| **#** | **Name** | **Typ** | **Beschreibung** |
|---|---|---|---|
| 1 | Sequenznummer | Unsigned Integer | Fortlaufende Zahl, die die Reihenfolge der produzierten Kontext Ereignisse angibt. |
| 2 | UUID | String | Eine eindeutige ID zur Identifikation eines Ereignisses. Die ID für jedes gesendete Ereignis individuell. |
| 3 | Prüfsumme | String | Check- oder Hashsumme über alle allgemeinen Attribute (ausgenommen die Prüfsumme selbst) und der Daten für die Diagnosemodule. |
| 4 | Origin | String | Name bzw. eindeutige Kennung des Senders des Ausführungskontextes. |
| | | | Diese Kennung ist konstant und ändert sich nicht. |
| 5 | Diganosedaten | map[string]Byte Array | Zuordnung von Diagnosedaten zu Diagnosemodulen im Program Supervisor. |
| | | | Als Schlüssel kommt ein String zum Einsatz anhand dessen im Program Supervisor die Datenextraktion und Aufteilung für die einzelnen Diagnosemodule erfolgt. Die Werte sind als Byte Array hinterlegt, da die konkrete Ausgestaltung der Datenstruktur vom Diagnosemodule abhängig ist. Für die Ausführungs- bzw. Zustandsdiagnose kommen die hierin beschriebenen Strukturen zum Einsatz. |

Der Program Supervisor kann eine Schnittstelle für den Empfang von Ausführungskontextereignissen, die durch die Sidecars genutzt wird, bereitstellen. Diese Schnittstelle kann als "Diagnostic Sink" bezeichnet werden. Die Schnittstelle kann dabei so ausgestaltet sein, dass der Empfang und die Verarbeitung bzw. die Weiterleitung an die Diagnose-Softwaremodule von eingehenden Ausführungskontextereignissen idempotent vonstattengeht und dementsprechend nicht zustandslos gestaltet ist.

Der Program Supervisor erreicht die Idempotenz durch das Interpretieren der in Tabelle 1 genannten Attribute "Sequenznummer" und "UUID" zu einem Idempotency Key. Auf Basis der Kombination der beiden Werte lässt sich der Verarbeitungsstand des jeweiligen Ausführungskontextes im Program Supervisor feststellen, da der Program Supervisor diesen anhand dieses Idempotency Key verfolgt.

In einer Ausführungsform kann auch die UUID als Idempotency Key genügen, ohne die Sequenznummer hinzuzufügen. Eine Kombination der beiden kann aber die Resilienz gegenüber einer zufälligen Kollision zweier Ereignisse mit denselben Werten bzw. UUIDs erhöhen.

Der Diagnostic Sink und die Diagnose Software Module kommunizieren In-Memory (was möglich ist, da die Ausführung im selben Container stattfindet) über eine definierte Schnittstelle. Diese Schnittstelle kann zwei Operationen bieten:
1) Senden der für das jeweilige Modul relevanten Daten vom Sink and das Diagnose Modul.
2) Einen Kanal zur Bestätigung vom Diagnosemodul zum Sink.

Die Umsetzung der Schnittstelle kann unabhängig der genutzten Programmiersprache sein und kann bspw. über geteilten Speicher oder über kontinuierliche In-Memory Kommunikation zwischen den Komponenten (bspw. Channels) funktionieren. Durch diese Schnittstelle entsteht eine lose Kopplung zwischen dem Diagnostic Sink und den Diagnose Modulen.

Die Verteilung und Extraktion der für ein Diagnose Modul relevanten Daten aus einem Ausführungskontextereignisses kann auf Basis einer zuvor festgelegten Konfiguration geschehen. Anhand dieser Konfiguration können auch die Instanziierung und Initialisierung der Diagnose Module geschehen.

Der Program Supervisor kann über eine Systemdiagnoseeinheit verfügen, die die Diagnose Ergebnisse der einzelnen Diagnose Module auswertet, aggregiert und das Aggregationsergebnis über die Nachrichteninfrastruktur der Ausführungsumgebung veröffentlicht.

Der Program Supervisor kann einfach erweitert werden, ohne dadurch negative Nebeneffekt im System zu verursachen. Um ein neues Diagnosemodul hinzuzufügen, sind lediglich zwei Schritte notwendig:
1) Implementierung des Diagnose Moduls im Programm Supervisor. Hierbei muss das Modul die oben beschriebenen Schnittstellen implementieren und eine Anpassung bzw. Konfiguration des Diagnostic Sinks durchführen, sodass dieser die neuen Daten aus dem Ausführungskontext Ereignis an das neue Diagnosemodul weiterleitet.
2) Die Struktur des Ausführungskontext-Ereignisses muss um Datenstrukturen für das neue Diagnosemodul angereichert werden. Wie genau die neue Datenstruktur aussieht kann von der Art des neuen Diagnosemoduls abhängig sein (beispielsweise können Attribute wie eine eindeutige ID und eine Check- bzw. Hashsumme (beispielsweise gebildet über die für das Diagnosemodul relevante Daten - nicht über das gesamte Ausführungskontext Ereignis) unabhängig von der Art des neuen Diagnosemoduls vorzufinden sein).

Durch den Einsatz eines Program Supervisor ist es nicht notwendig, einen weiteren Container mit dem Diagnosemodul bereitzustellen und es können auf diese Weise Systemressourcen der Ausführungsumgebung geschont werden. Darüber hinaus bleibt auch die Anzahl der zur Diagnose benötigten Nachrichten gleich, sodass eine Erweiterung auch hier keine zusätzliche Systemlast erzeugt.

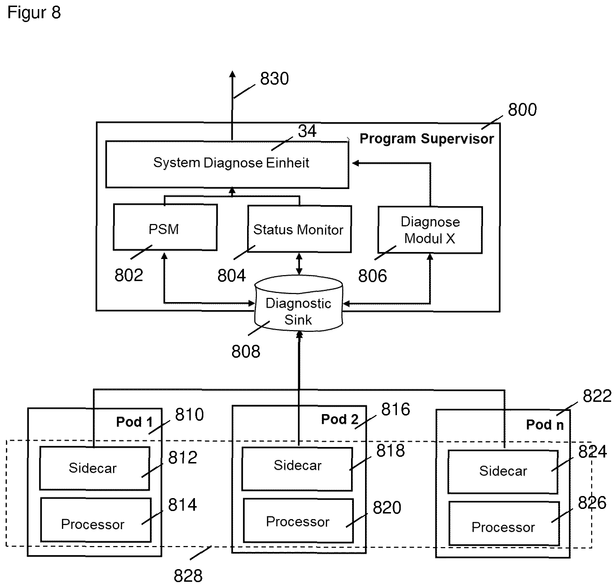

Figur 8 zeigt den Program Supervisor 800 in einer beispielhaften Anwendung. Der Program Supervisor 800 enthält die System Diagnose Einheit 34, ein PSM 802, einen Status Monitor 804, und ein Diagnose Modul X 806, welche alle sowohl in Datenaustausch mit der System Diagnose Einheit 34 stehen (über eine durch Pfeile illustrierte Diagnose Modul Schnittstelle) als auch mit der Diagnostic Sink 808 in Datenaustausch stehen (über eine durch Pfeile illustrierte Diagnostic Sink Schnittstelle). Der PSM 802, der Status Monitor 804, und das Diagnose Modul X 806 entsprechen der hierin beschriebenen logischen Funktionalität.

Der PSM ("Program Sequence Monitoring") 802 kann als Ausführungsüberwachung eingerichtet sein, wie sie oben beschrieben ist und kann die Funktionsweise und das Aufgabenspektrum der Ausführungsüberwachung beinhalten bzw. übernehmen.

Aufgabe der PSM 802 kann beispielsweise Sicherstellung bzw. Überwachung der logischen und zeitlichen Korrektheit des Programmablaufs sein. Hierzu kann das PSM Modul 802 Daten aus dem Ausführungskontext Ereignis nutzen (beispielsweise "Sequenznummer" und "Origin", und/ oder Start- und Endzeiten der Verarbeitung in einem Processor, die das Sidecar ermittelt und im Feld "Diagnosedaten" des Ausführungskontextes hinzufügt).

Der Status Monitor 804 kann der oben beschriebenen Zustandsüberwachung entsprechen und dasselbe Aufgabenspektrum auf dieselbe Art und Weise, wie dort beschrieben, übernehmen.

Der Status Monitor 804 kann auf Basis von Heartbeats und Umgebungsinformationen der Laufzeitumgebung (also beispielsweise von Kubernetes) kontinuierlich die Systemintegrität überprüfen.

Heartbeats können in den "Diagnosedaten" des Ausführungskontextes mit mindestens einem "Status" Attribut zu finden sein. Die Umgebungsinformationen kann Status Monitor 804 über eine Schnittstelle aus der Ausführungsumgebung (bspw. erstellte Container und/ oder verfügbare Hardware und deren Auslastung) erhalten.

Das Diagnose Modul X 806 kann ein Platzhalter sein, um die mögliche Erweiterbarkeit des Program Supervisors mit weiteren Diagnosemodulen beispielhaft zu illustrieren.

Das Diagnose Modul X 806 kann beispielsweise eine Diagnose sein, die Testdatenverifikationen vornimmt. Hierbei kann im ersten Processor das Sidecar zwischen zwei regulären Events einen Testdatensatz injizieren, der das Programm durchläuft und das Sidecar im letzten Processor eine entsprechende Ergänzung in den "Diagnosedaten" des Ausführungskontextes vornimmt. Ein "Testdaten Diagnose Modul" kann diese dann überprüfen.

Mehrere Pods 810, 816, 822 liefern Daten über einen Ausführungskontext an die Diagnostic Sink 808. Ein erster Pod 810 kann ein Sidecar 812 und einen Processor 814 enthalten. Ein zweiter Pod 816 kann ein Sidecar 818 und einen Processor 820 enthalten. Ein dritter Pod 822 kann ein Sidecar 824 und einen Processor 826 enthalten.

Es wird verstanden werden dass die Pods 810, 816, 822 nur beispielhaft dargestellt sind. Es können mehr oder weniger als drei Pods bereitgestellt sein, und die Konfiguration der Pods kann unterschiedlich und verschieden von der dargestellten Konfiguration mit einem Sidecar sein. Die ist durch die gestrichelte Box 828 dargestellt.

Die System Diagnose Einheit 34 liefert einen Systemstatus 830 zur weiteren Verarbeitung.

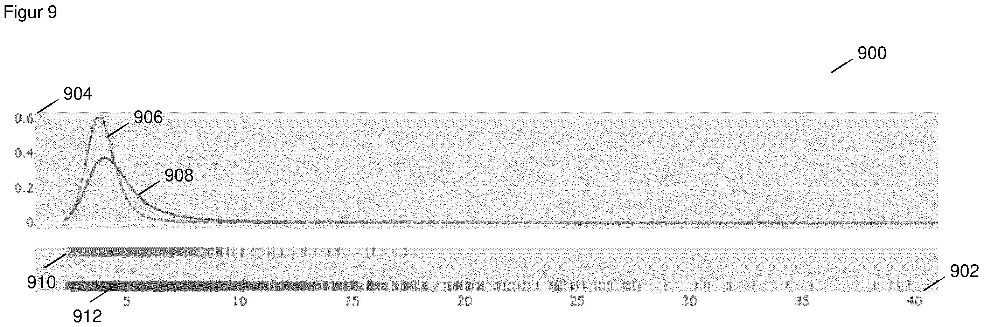

Figur 9 zeigt Diagramme 900 zur Veranschaulichung der Latenzreduktion durch den Program Supervisor im Vergleich zu einem zweikanaligen Nachrichtensystem. Dabei ist die Latenzverteilung ohne die drei größten Ausreißer für eine Stichprobengröße von 10.000 Messungen dargestellt. Die horizontale Achse 902 gibt die Latenz in Millisekunden wieder. Die vertikale Achse 904 die Dichte der für die jeweilige Latenz ermittelten Messungen. Die Kurve 906 und die Balken 910 zeigen die Ergebnisse bei Einsatz des Program Supervisor. Die Kurve 908 und die Balken 912 zeigen die Ergebnisse bei Einsatz des zweikanaligen Nachrichtensystems.

In einem Beispiel wird durch den Einsatz des Program Supervisor einer Reduzierung der Nachrichtenlast um bis zu 75% im Vergleich zu einem zweikanaligen Nachrichtensystems erreicht durch die Eliminierung der (container-externen) Kommunikation zu den einzelnen Diagnoseeinheiten, sowie der Diagnoseeinheiten untereinander und daraus resultierende niedrigere Anforderungen an die Rechenkapazitäten der Ausführungsumgebung sowie eine Reduktion der Latenz und Vergrößerung der Kapazität für des Nachrichtensystem für nicht Diagnosedaten.

Neue (also weitere, zusätzliche) Diagnoseeinheiten können im Programm Supervisor integriert werden und erhöhen damit nicht die Nachrichtenanzahl, die Logikeinheiten senden müssen. Lediglich eine Anpassung des Nachrichtenformats der Diagnosenachricht ist notwendig.

In einer Ausführungsform kann komplett auf eine Nachrichteninfrastruktur im Sinne einer Event-Broker basierte Kommunikation verzichtet werden und es wird nur noch eine direkte Kommunikation zwischen allen beteiligten Akteuren stattfindet, wodurch Komplexität sowie Administrations- und Wartungsaufwand verringert wird.

Die Sicherheitsvorrichtung gemäß verschiedener Ausführungsformen kann für holistischen Safety Lösungen, in denen eine SW (Software)-basierte Sicherheitslösung potenziell eingesetzt werden könnten, Anwendung finden.

### Bezugszeichenliste

- 10: Sicherheitsvorrichtung
- 12: Maschine
- 14: Sensor
- 16: Hardwarekomponente
- 18: Maschinensteuerung
- 20: Block zusammengefasster Sensoren
- 22: Ausführungsumgebung
- 24: Master
- 26: Rechenknoten
- 28: Logikeinheit
- 30: Unterknoten
- 32: Sicherheitsfunktionseinheit
- 34: Diagnoseeinheit
- 36: Automatisierungseinheit
- 38: Knotenmanagereinheit
- 40: Datenbank
- 42: API-Server
- 44: Controller Manager
- 46: Zustandsüberwachung
- 48: Ausführungsüberwachung
- 50: Zustandsnachricht
- 52: Ausführungsnachricht
- 54: Abschaltdienst
- 56: Aggregator
- 58: Ausführungserwartung
- 800: Program Supervisor
- 802: PSM
- 804: Status Monitor
- 806: Diagnose Modul X
- 808: Diagnostic Sink
- 810: Pod
- 812: Sidecar
- 814: Processor
- 816: Pod
- 818: Sidecar
- 820: Processor
- 822: Pod
- 824: Sidecar
- 826: Processor
- 828: Box
- 830: Systemstatus
- 900: Diagramme zur Veranschaulichung der Latenzreduktion
- 902: horizontal Achse
- 904: vertikale Achse
- 906: Kurve
- 908: Kurve
- 910: Balken
- 912: Balken

## Patentansprüche

1. Sicherheitsvorrichtung (10) zur Überwachung mindestens einer Maschine (12), wobei die Sicherheitsvorrichtung (10) mindestens einen Sensor (14) zum Erzeugen von Sensordaten zu der Maschine (12) sowie eine mindestens mittelbar mit dem Sensor (14) und der Maschine (12) verbundene Verarbeitungseinheit (16, 22) für die Sensordaten aufweist, die als Ausführungsumgebung (22) mit mindestens einem Rechenknoten (26) sowie dafür ausgebildet ist, eine Vielzahl von Logikeinheiten (28) auf dem mindestens einen Rechenknoten (26) ablaufen zu lassen, wobei mindestens eine Logikeinheit (28) als Sicherheitsfunktionseinheit (32) zur sicherheitsgerichteten Auswertung der Sensordaten und mindestens eine Logikeinheit (28) als Diagnoseeinheit (34) zur Überwachung der mindestens einen Sicherheitsfunktionseinheit (32) ausgebildet ist,
wobei die mindestens eine Sicherheitsfunktionseinheit (32) dafür ausgebildet ist, Zustandsnachrichten (50) und Ausführungsnachrichten (52) an die Diagnoseeinheit (34) zu übermitteln;
wobei die Diagnoseeinheit (34) dafür ausgebildet ist, in einer Zustandsüberwachung (46) anhand von Zuständen aus den Zustandsnachrichten (50) und in einer Ausführungsüberwachung (48) anhand eines Ausführungsablaufs aus den Ausführungsnachrichten (52) eine sicherheitsrelevante Fehlfunktion der Sicherheitsvorrichtung (10) zu erkennen,
wobei die mindestens eine Logikeinheit (28), die als Diagnoseeinheit (34) ausgebildet ist, zugleich als Sicherheitsfunktionseinheit (32) ausgebildet ist, und die Sicherheitsfunktionseinheit (32) und die Diagnoseeinheit (34) innerhalb der Logikeinheit (28), die als Diagnoseeinheit (34) ausgebildet ist, miteinander kommunizieren.

2. Sicherheitsvorrichtung (10) nach Anspruch 1,
wobei die mindestens eine Logikeinheit (28), die als Diagnoseeinheit (34) ausgebildet ist, eine Schnittstelle für den Empfang von Ausführungskontextereignissen aufweist.

3. Sicherheitsvorrichtung (10) nach Anspruch 2,
wobei die Schnittstelle und Diagnosemodule über In-Memory miteinander kommunizieren.

4. Sicherheitsvorrichtung (10) nach Anspruch 3,
wobei die Kommunikation zwischen der Schnittstelle und den Diagnosemodulen aufweist ein Senden der für das jeweilige Diagnosemodul relevanten Daten von der Schnittstelle an das Diagnosemodule.

5. Sicherheitsvorrichtung (10) nach einem der vorhergehenden Ansprüche 3 oder 4,
wobei die Kommunikation zwischen der Schnittstelle und den Diagnosemodulen aufweist ein Übermitteln einer Bestätigung vom Diagnosemodul zur Schnittstelle.

6. Sicherheitsvorrichtung (10) nach einem der vorhergehenden Ansprüche, wobei die Verteilung und Extraktion der für ein Diagnosemodul relevanten Daten aus einem Ausführungskontextereignisses geschieht auf Basis einer zuvor festgelegten Konfiguration.

7. Sicherheitsvorrichtung (10) nach Anspruch 6,
wobei die Konfiguration über eine Tabelle definiert ist.

8. Sicherheitsvorrichtung (10) nach einem der Ansprüche 6 oder 7,
wobei die Konfiguration eine Sequenznummer und/ oder eine Identifikation und/ oder eine Prüfsumme und/ oder einen Sender und/ oder eine Zuordnung von Diagnosedaten zu Diagnosemodulen definiert.

9. Sicherheitsvorrichtung (10) nach einem der vorhergehenden Ansprüche, wobei die Diagnoseeinheit (34) dafür ausgebildet ist, situationsbezogen festzustellen, ob eine Fehlfunktion sicherheitsrelevant ist.

10. Sicherheitsvorrichtung (10) nach einem der vorhergehenden Ansprüche, ferner aufweisend:
eine Abschalteinheit (54) aufweist, die dafür ausgebildet ist, auf Anweisung der Diagnoseeinheit (34) im Falle einer sicherheitsrelevanten Fehlfunktion oder 30 auf Anweisung einer Sicherheitsfunktionseinheit (32) bei Erkennung einer Gefahrensituation anhand der ausgewerteten Sensordaten die Maschine (12) in einen sicheren Zustand zu versetzen.

11. Sicherheitsvorrichtung (10) nach einem der vorhergehenden Ansprüche, wobei die Diagnoseeinheit (34) für die Ausführungsüberwachung (48) dafür ausgebildet ist, eine vorgegebene Ausführungserwartung (58) für den Ausführungsablauf der mindestens einen Sicherheitsfunktionseinheit (32) abzurufen,
insbesondere die Ausführungserwartung (58) anhand bisheriger Zustände, Arbeitsabläufe und/oder Arbeitsergebnisse der Logikeinheiten (28) zu modifizieren, und die Ausführungserwartung (58) mit dem aus den Ausführungsnachrichten (52) abgeleiteten Ausführungsablauf zu vergleichen.

12. Sicherheitsvorrichtung (10) nach Anspruch 11,
wobei die Diagnoseeinheit (34) dafür ausgebildet ist, bei einer Bewertung des Vergleichs der Ausführungserwartung (58) mit dem aus den Ausführungsnachrichten (52) abgeleiteten Ausführungsablauf mindestens eines der folgenden Kriterien zu berücksichtigen: eine Ausführungsreihenfolge, das Ausbleiben einer Ausführung, ein zusätzliches Ausführen, eine Abweichung der Ausführungen von einem Zeitraster, eine zu kurze Ausführungsdauer oder eine zu lange Ausführungsdauer.

13. Sicherheitsvorrichtung (10) nach einem der vorhergehenden Ansprüche, wobei die Ausführungsnachricht (52) eine Ausführungsinformation über die jeweils letzte Ausführung der Sicherheitsfunktion aufweist, insbesondere mit Startzeit und/oder Ausführungsdauer.

14. Sicherheitsvorrichtung (10) nach einem der vorhergehenden Ansprüche, wobei der mindestens eine Sensor (14) als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet ist, insbesondere Temperatur-, Durchfluss-, Füllstand- oder Drucksensor, und wobei die Sicherheitsvorrichtung (10) insbesondere eine Vielzahl gleicher oder unterschiedlicher Sensoren (14) aufweist.

15. Computerimplementiertes Verfahren zur Überwachung mindestens einer Maschine (12), bei dem mindestens ein Sensor (14) Sensordaten zu der Maschine (12) erzeugt und eine mindestens mittelbar mit dem Sensor (14) und der Maschine (12) verbundene Verarbeitungseinheit (16, 22) für die Sensordaten als Ausführungsumgebung (22) eine Vielzahl von Logikeinheiten (28) auf mindestens einem Rechenknoten (26) ablaufen lässt, wobei mindestens eine Logikeinheit (28) als Sicherheitsfunktionseinheit (32) die Sensordaten sicherheitsgerichtet auswertet und mindestens eine Logikeinheit (28) als Diagnoseeinheit (34) die mindestens eine Sicherheitsfunktionseinheit (32) überwacht,
wobei die mindestens eine Sicherheitsfunktionseinheit (32) Zustandsnachrichten (50) und Ausführungsnachrichten (52) an die Diagnoseeinheit (34) übermittelt und dass die Diagnoseeinheit (34) in einer Zustandsüberwachung (46) anhand von Zuständen aus den Zustandsnachrichten (50) und in einer Ausführungs-überwachung (48) anhand eines Ausführungsablaufs aus den Ausführungsnachrichten (52) eine sicherheitsrelevante Fehlfunktion erkennt;
wobei die mindestens eine Logikeinheit (28), die als Diagnoseeinheit (34) die mindestens eine Sicherheitsfunktionseinheit (32) überwacht zugleich als die Sicherheitsfunktionseinheit (32) ausgebildet ist, und die Sicherheitsfunktionseinheit (32) und die Diagnoseeinheit (34) innerhalb der Logikeinheit (28), die als Diagnoseeinheit (34) die mindestens eine Sicherheitsfunktionseinheit (32) überwacht, miteinander kommunizieren.

## Geänderte Patentansprüche

### Geänderte Patentansprüche gemäss Regel 137(2) EPÜ.

1. Sicherheitsvorrichtung (10) zur Überwachung mindestens einer Maschine (12), wobei die Sicherheitsvorrichtung (10) mindestens einen Sensor (14) zum Erzeugen von Sensordaten zu der Maschine (12) sowie eine mindestens mittelbar mit dem Sensor (14) und der Maschine (12) verbundene Verarbeitungseinheit (16, 22) für die Sensordaten aufweist, die als Ausführungsumgebung (22) mit mindestens einem Rechenknoten (26) sowie dafür ausgebildet ist, eine Vielzahl von Logikeinheiten (28) auf dem mindestens einen Rechenknoten (26) ablaufen zu lassen, wobei mindestens eine Logikeinheit (28) als Sicherheitsfunktionseinheit (32) zur sicherheitsgerichteten Auswertung der Sensordaten und mindestens eine erste Logikeinheit (28) aus der Vielzahl von Logikeinheiten (28) als Diagnoseeinheit (34) zur Überwachung der mindestens einen Sicherheitsfunktionseinheit (32) ausgebildet ist,
wobei die mindestens eine Sicherheitsfunktionseinheit (32) dafür ausgebildet ist, Zustandsnachrichten (50) und Ausführungsnachrichten (52) an die Diagnoseeinheit (34) zu übermitteln;
wobei die Diagnoseeinheit (34) dafür ausgebildet ist, in einer Zustandsüberwachung (46) anhand von Zuständen aus den Zustandsnachrichten (50) und in einer Ausführungsüberwachung (48) anhand eines Ausführungsablaufs aus den Ausführungsnachrichten (52) eine sicherheitsrelevante Fehlfunktion der Sicherheitsvorrichtung (10) zu erkennen,
wobei die mindestens eine erste Logikeinheit (28) zugleich als Sicherheitsfunktionseinheit (32) ausgebildet ist, und die Sicherheitsfunktionseinheit (32) und die Diagnoseeinheit (34) innerhalb der ersten Logikeinheit (28) miteinander kommunizieren.

2. Sicherheitsvorrichtung (10) nach Anspruch 1,
wobei die mindestens eine erste Logikeinheit (28) eine Schnittstelle für den Empfang von Ausführungskontextereignissen aufweist.

3. Sicherheitsvorrichtung (10) nach Anspruch 2,
wobei die Schnittstelle und Diagnosemodule der Diagnoseeinheit (34) über In-Memory miteinander kommunizieren.

4. Sicherheitsvorrichtung (10) nach Anspruch 3,
wobei die Kommunikation zwischen der Schnittstelle und den Diagnosemodulen ein Senden der für das jeweilige Diagnosemodul relevanten Daten von der Schnittstelle an das Diagnosemodule aufweist.

5. Sicherheitsvorrichtung (10) nach einem der vorhergehenden Ansprüche 3 oder 4,
wobei die Kommunikation zwischen der Schnittstelle und den Diagnosemodulen ein Übermitteln einer Bestätigung vom Diagnosemodul zur Schnittstelle aufweist.

6. Sicherheitsvorrichtung (10) nach einem der vorhergehenden Ansprüche, wobei die Verteilung und Extraktion der für ein Diagnosemodul relevanten Daten aus einem Ausführungskontextereignisses geschieht auf Basis einer zuvor festgelegten Konfiguration.

7. Sicherheitsvorrichtung (10) nach Anspruch 6,
wobei die Konfiguration über eine Tabelle definiert ist.

8. Sicherheitsvorrichtung (10) nach einem der Ansprüche 6 oder 7,
wobei die Konfiguration eine Sequenznummer und/ oder eine Identifikation und/ oder eine Prüfsumme und/ oder einen Sender und/ oder eine Zuordnung von Diagnosedaten zu Diagnosemodulen definiert.

9. Sicherheitsvorrichtung (10) nach einem der vorhergehenden Ansprüche, wobei die Diagnoseeinheit (34) dafür ausgebildet ist, situationsbezogen festzustellen, ob eine Fehlfunktion sicherheitsrelevant ist.

10. Sicherheitsvorrichtung (10) nach einem der vorhergehenden Ansprüche, ferner aufweisend:
eine Abschalteinheit (54) aufweist, die dafür ausgebildet ist, auf Anweisung der Diagnoseeinheit (34) im Falle einer sicherheitsrelevanten Fehlfunktion oder 30 auf Anweisung einer Sicherheitsfunktionseinheit (32) bei Erkennung einer Gefahrensituation anhand der ausgewerteten Sensordaten die Maschine (12) in einen sicheren Zustand zu versetzen.

11. Sicherheitsvorrichtung (10) nach einem der vorhergehenden Ansprüche, wobei die Diagnoseeinheit (34) für die Ausführungsüberwachung (48) dafür ausgebildet ist, eine vorgegebene Ausführungserwartung (58) für den Ausführungsablauf der mindestens einen Sicherheitsfunktionseinheit (32) abzurufen,
insbesondere die Ausführungserwartung (58) anhand bisheriger Zustände, Arbeitsabläufe und/oder Arbeitsergebnisse der Logikeinheiten (28) zu modifizieren, und die Ausführungserwartung (58) mit dem aus den Ausführungsnachrichten (52) abgeleiteten Ausführungsablauf zu vergleichen.

12. Sicherheitsvorrichtung (10) nach Anspruch 11,
wobei die Diagnoseeinheit (34) dafür ausgebildet ist, bei einer Bewertung des Vergleichs der Ausführungserwartung (58) mit dem aus den Ausführungsnachrichten (52) abgeleiteten Ausführungsablauf mindestens eines der folgenden Kriterien zu berücksichtigen: eine Ausführungsreihenfolge, das Ausbleiben einer Ausführung, ein zusätzliches Ausführen, eine Abweichung der Ausführungen von einem Zeitraster, eine zu kurze Ausführungsdauer oder eine zu lange Ausführungsdauer.

13. Sicherheitsvorrichtung (10) nach einem der vorhergehenden Ansprüche, wobei die Ausführungsnachricht (52) eine Ausführungsinformation über die jeweils letzte Ausführung der Sicherheitsfunktion aufweist, insbesondere mit Startzeit und/oder Ausführungsdauer.

14. Sicherheitsvorrichtung (10) nach einem der vorhergehenden Ansprüche, wobei der mindestens eine Sensor (14) als optoelektronischer Sensor, insbesondere Lichtschranke, Lichttaster, Lichtgitter, Laserscanner, FMCW-LI-DAR oder Kamera, als Ultraschallsensor, Trägheitssensor, kapazitiver Sensor, magnetischer Sensor, induktiver Sensor, UWB-Sensor oder als Prozessgrößensensor ausgebildet ist, insbesondere Temperatur-, Durchfluss-, Füllstand- oder Drucksensor, und wobei die Sicherheitsvorrichtung (10) insbesondere eine Vielzahl gleicher oder unterschiedlicher Sensoren (14) aufweist.

15. Computerimplementiertes Verfahren zur Überwachung mindestens einer Maschine (12), bei dem mindestens ein Sensor (14) Sensordaten zu der Maschine (12) erzeugt und eine mindestens mittelbar mit dem Sensor (14) und der Maschine (12) verbundene Verarbeitungseinheit (16, 22) für die Sensordaten als Ausführungsumgebung (22) eine Vielzahl von Logikeinheiten (28) auf mindestens einem Rechenknoten (26) ablaufen lässt, wobei mindestens eine Logikeinheit (28) als Sicherheitsfunktionseinheit (32) die Sensordaten sicherheitsgerichtet auswertet und mindestens eine erste Logikeinheit (28) aus der Vielzahl von Logikeinheiten (28) als Diagnoseeinheit (34) die mindestens eine Sicherheitsfunktionseinheit (32) überwacht, wobei die mindestens eine Sicherheitsfunktionseinheit (32) Zustandsnachrichten (50) und Ausführungsnachrichten (52) an die Diagnoseeinheit (34) übermittelt und dass die Diagnoseeinheit (34) in einer Zustandsüberwachung (46) anhand von Zuständen aus den Zustandsnachrichten (50) und in einer Ausführungs-überwachung (48) anhand eines Ausführungsablaufs aus den Ausführungsnachrichten (52) eine sicherheitsrelevante Fehlfunktion erkennt;
wobei die mindestens eine erste Logikeinheit (28), die als Diagnoseeinheit (34) die mindestens eine Sicherheitsfunktionseinheit (32) überwacht, zugleich als die Sicherheitsfunktionseinheit (32) ausgebildet ist, und die Sicherheitsfunktionseinheit (32) und die Diagnoseeinheit (34) innerhalb der ersten Logikeinheit (28), die als Diagnoseeinheit (34) die mindestens eine Sicherheitsfunktionseinheit (32) überwacht, miteinander kommunizieren.
